# EUROPÄISCHE PATENTSCHRIFT

(11) **EP 4 068 968 B1**
(45) Veröffentlichungstag und Bekanntmachung des Hinweises auf die Patenterteilung: **27.05.2026**
(21) Anmeldenummer: 20772010.3
(22) Anmeldetag: 09.09.2020
(51) Int. Cl.: A01N 43/80, A01N 43/82, A01N 25/30, A01P 13/00

(54) **HOCHWIRKSAME FORMULIERUNGEN AUF BASIS VON 2-[(2,4-DICHLORPHENYL)-METHYL]-4,4' -DIMETHYL-3-ISOXAZOLIDINON UND/ODER FLUFENACET**
HIGHLY EFFECTIVE FORMULATIONS BASED ON 2- [(2,4-DICHLOROPHENYL) -METHYL] -4,4 '-DIMETHYL-3-ISOXAZOLIDINONES AND/OR FLUFENACET
FORMULATIONS HAUTEMENT EFFICACES À BASE DE 2-[(2,4-DICHLORPHÉNYL)-MÉTHYL]-4,4'-DIMÉTHYL-3-ISOXAZOLIDINONE ET/OU DE FLUFÉNACET

(30) Priorität: 11.09.2019 EP 19196784
(43) Veröffentlichungstag der Anmeldung: 12.10.2022
(73) Patentinhaber: Bayer Aktiengesellschaft, 51371 Leverkusen (DE)
(72) Erfinder: KRAUSE, Jens, 51375 Leverkusen (DE); MARTELLETTI, Arianna, 65843 Sulzbach im Taunus (DE); BICKERS, Udo, 50737 Köln (DE); RATSCHINSKI, Arno, 40627 Düsseldorf (DE)
(74) Vertreter: BIP Patents
(86) Internationale Anmeldenummer: PCT/EP2020/075171
(87) Internationale Veröffentlichungsnummer: WO 2021/048188

(56) Entgegenhaltungen:
- EP-A1- 3 473 103
- EP-B1- 0 922 388
- WO-A1-2015/127259
- WO-A1-96/00010
- WO-A2-01/39597
- WO-A2-2012/148689
- GB-A- 2 425 955
- JP-A- 2013 227 242
- US-A- 4 822 401
- DATABASE WPI Week 201243, Derwent World Patents Index; AN 2012-B91518, XP002796941
- DATABASE WPI Week 201474, Derwent World Patents Index; AN 2014-T91689, XP002796942
- DATABASE WPI Week 201524, Derwent World Patents Index; AN 2015-218399, XP002796943
- DATABASE WPI Week 201777, Derwent World Patents Index; AN 2017-75502W, XP002796944
- DATABASE WPI Week 201875, Derwent World Patents Index; AN 2018-812284, XP002796945
- TOM JORDAN ET AL: "Adjuvants Used With Herbicides: Factors to Consider", 23 September 2011 (2011-09-23), U.S.A., pages 1 - 3, XP055658478, Retrieved from the Internet <URL:https://ag.purdue.edu/btny/weedscience/documents/adjuvants%20-%2011.pdf> [retrieved on 20200116]
- ANDR JIRÍ ET AL: "Effect of adjuvants on the dissipation, efficacy and selectivity of three different pre-emergent sunflower herbicides", PLANT, SOIL AND ENVIRONMENT, vol. 63, no. No. 9, 26 September 2017 (2017-09-26), pages 409 - 415, XP055658482, ISSN: 1214-1178, DOI: 10.17221/365/2017-PSE
- "CAS Registry Database", 11 October 2018, CHEMICAL ABSTRACTS SERVICE, U.S.A., article .: "CAS-No 2244895-98-3: Niagara 1 and Niagara 2", pages: 1 - 2, XP055658899

## Beschreibung

Die vorliegende Erfindung betrifft Formulierungen auf Basis von 2-[(2,4-Dichlorphenyl)-methyl]-4,4'-dimethyl-3-isoxazolidinone und/oder Flufenacet, deren Herstellung sowie deren Mischungen und deren Verwendung als agrochemische Formulierung mit verbesserter biologischer Wirkung und erhöhter Unkraut- und Ungrasbekämpfung.

Der Wirkstoff 2-[(2,4-Dichlorphenyl)-methyl]-4,4'-dimethyl-3-isoxazolidinone (CAS Nummer 81777-95-9 bzw. IUPAC 2-(2,4-dichlorobenzyl)-4,4-dimethyl-1,2-oxazolidin-3-one, im Folgenden abgekürzt DCPMI), sowie beispielsweise als Vorlauflaufherbizid Flufenacet, 4'-Fluoro-N-isopropyl-2-(5-trifluoromethyl-1,3,4-thiadiazol-2-yloxy)acetanilide, im Folgenden abgekürzt als FFA, sind herbizide Wirkstoffe. Die beiden Wirkstoffe werden typischerweise in wässrigen Formulierungen wie etwa Kapselsuspensions- sowie Suspensionskonzentraten verwendet. Meist werden die Formulierungen im Vorauflauf appliziert, wobei sich Vorauflauf hier auf den Auflauf der Unkräuter und Ungräser bezieht. Hierbei wirken die Wirkstoffe nicht über die Blattaufnahme, sondern werden auf dem Boden verteilt und anschließend über die Wurzel, das Saatgut und/oder die gerade aufkeimende Pflanze (Hypocotyl) aufgenommen.

DCPMI wird in herbiziden Zusammensetzungen und Mischungen eingesetzt oder als selektives Grasherbizid verwendet, wie beispielsweise in der WO2015/127259 A1 oder WO2012/148689 A beschrieben. Kapselsuspensionen (CS) und Suspensionskonzentrate (SC) von DCPMI sind aus der WO2019/076744, WO 2018/024839 und WO2019/211263 sowie der WO2015/127259 bekannt.

Typischerweise sind Wirkstoffformulierungen für Blattanwendungen durch die Zugabe von Penetrationsförderern, wie etwa Öle oder ethoxylierte-Alkohole, so optimiert, dass der Wirkstoff schnell durch das Blatt in die Pflanze eindringt.

Bei der Boden-Applikation sind hingegen nur wenige Hilfsstoffe bekannt, die für eine verbesserte Aufnahme in Saatgut, aufkeimende Pflanze oder Wurzel sorgen. Auch ist der Wirkmechanismus der Hilfsstoffe bei Bodenapplikation in den meisten Fällen nicht nur unbekannt, sondern die Wirksamkeit der Hilfstoffe auch sehr stark vom Wirkstoff abhängig. Daher gibt es auch nur sehr wenig bekannte Hilfstoffe, die die Bodenaufnahme beeinflussen. Bekannt sind Formulierungen, die sogenannte Feuchthaltemittel (Humectants) enthalten, wie sie in WO2014/159948 beschrieben werden. Ebenfalls bekannt sind Phenoxypolyalkylenoxy-Sulfate oder -Phosphate wie sie in WO 2018/141594 beschrieben werden.

Jiří et al., Plant, Soil and Environment 2017, 63, 409-415, betrifft eine experimentelle Studie, mit dem Ziel Wirksamkeit, Selektivität gegenüber Sonnenblumen und Abbau (Dissipation) von drei Vorauflaufherbiziden zu vergleichen. Hierbei wurden Flurochloridon, Linuron und Oxyfluorfen jeweils einzeln ausgebracht, und jedes Herbizid wurde außerdem in Tankmischung mit zwei unterschiedlichen Zusatzstoffen (einem silikonbasierten Adjuvans und Paraffinöl) appliziert.

Nachteilig an den bekannten Formulierungen ist, dass die Wirkung zur Unkrautbehandlung oft nicht ausreichend ist, so daß entweder gar keine oder nur eine unzureichende Wirkung erzielt wird, oder hohe Einsatzmengen erforderlich sind.

Für die Applikation von DCPMI werden oft Kapselsuspensionen verwendet, die in ihrer Wirkung zusätzlich noch schwächer als Suspensionskonzentrate sind.

Ferner ist bei den bekannten Formulierungen nachteilig, dass Hilfsstoffe oft unter trockenen Bedingungen deutlich schwächer oder gar nicht wirken. Da eine langfristige Wetterprognose über Wochen oder ggf. bei einer Herbstapplikation sogar über Monate für den Landwirt schlichtweg unmöglich ist, besteht Bedarft an einer zuverlässigen Formulierung, die sowohl unter feuchten als auch nassen Bedingungen gleichbleibend sehr gut wirkt.

Aufgabe der Erfindung war es somit, optimierte Formulierungen bereitzustellen, die sowohl unter feuchten als auch unter trockenen Bedingungen eine deutlich bessere Wirkung zeigen als die bekannten Formulierungen. Hierbei sollte die Wirkoptimierung vor allem im Vorauflauf vorhanden sein. Die Wirkung sollte hierbei nicht nur besser werden, sondern auch unter feuchten und trockenen Bedingungen gleichbleibend hoch sein.

Zusätzlich zur Wirkungssteigerung ist anzustreben, dass die Selektivität gegenüber Kulturen nicht erniedrigt wird.

Die Aufgabe der vorliegenden Erfindung wurde mit den erfindungsgemäßen Formulierungen gemäß den Ansprüchen gelöst.

Beschrieben, jedoch nicht notwendigerweise anspruchsgemäss sind (agrochemische) Formulierungen enthaltend
a) DCPMI und/oder mindestens ein Vorauflaufherbizid,
b) mindestens ein Dispergiermittel,
c) mindestens einen Wirkverbesserer ausgewählt aus der Gruppe umfassend organisch modifizierten (poly)-glycoside und/oder -furanosen und/oder -pyranosen, und/oder organisch modifizierten Sorbitanen und/oder Sorbitole,
d) optional mindestens einen von a) verschiedenen agrochemischen Wirkstoff,
e) optional mindestens einen Safener,
f) optional mindestens einen Verdicker, und
g) optional weitere Zusatz- und Hilfsstoffe,
h) Wasser.

In einer bevorzugten Ausführungsform sind die Komponenten d) bis g) zwingend enthalten.

Geeignete Vorauflaufherbizide a) können ausgewählt sein aus der Gruppe umfassend Acetochlor, Aclonifen, Flufenacet, Diflufenican, Clomazon, Pendimethalin, Pyroxasulfon, Cinmethylin, Dimethenamid, und weiter bevorzugt Flufenacet und Pyroxasulfon, und besonders bevorzugt Flufenacet. Erfindungsgemässe Formulierungen enthalten DCMPI und/oder Flufenacet.

Die von a) verschiedenen agrochemische Wirkstoffe d) können ausgewählt sein aus der Gruppe der Herbizide, Insektizide, Fungizide und Nematizide, vorzugsweise ist d) ein weiteres Herbizid.

Ebenfalls Gegenstand der vorliegenden Erfindung sind wasserdispergierbare Suspensionskonzentrate (SC), Kapselsuspensionskonzentrate (CS) sowie Mischungen aus SC und CS ((ZC) Formulierungen) erhältlich nach dem erfindungsgemäßen Verfahren.

Die Herstellung des erfindungsgemäßen SC kann nach den im Stand der Technik bekannten Verfahren erfolgen, z.B. durch Nassvermahlung der Komponenten in Perlmühlen (wie z.B. diskontinuierliche Perlmühlen, oder kontinuierliche Perlmühlen), oder Kolloidmühlen (wie z.B. Zahnkolloidmühlen). Die Herstellung der CS erfolgt mittels Grenzflächenpolymerisation.

Der Anteil an Wasser in den erfindungsgemäßen Formulierungen kann im Allgemeinen 25 bis 98 Gew.-%, bevorzugt 35 bis 85 Gew.-% betragen, wobei Wasser den Anteil der Komponenten a) - g) zu 100 Gew.-% ergänzt.

Dabei bezieht sich die Angabe "Gew.-%" (Gewichtsprozent) hier und in der gesamten Beschreibung, wenn nicht anders definiert, auf das relative Gewicht der jeweiligen Komponente bezogen auf das Gesamtgewicht der Formulierung, wobei Formulierung hier die nicht wasserverdünnte, nicht anwendungsfertige Zusammensetzung beschreibt.

Die Formulierung kann typischerweise Reste organischer Lösemittel aus den Zusatzstoffen von 0 bis 5,0 Gew.-% enthalten, weiter bevorzugt von von 0,05 bis 4,0 Gew.-%, und besonders bevorzugt von 0,1bis 2,5 Gew.-%.

Der Anteil an Wirkstoff a) in den erfindungsgemäßen Formulierungen beträgt vorzugsweise 0,5 bis 55,0 Gew.-%, weiter bevorzugt 0,5 bis 45,0 Gew.-%, noch weiter bevorzugt 5,0 bis 40,0 Gew.-%, besonders bevorzugt 10,0 bis 40,0 Gew.-%.

Sofern weitere Wirkstoffe d) enthalten sind, beträgt der Gesamtanteil der Komponenten a) und d) vorzugsweise 0,5 bis 55,0 Gew.-%, weiter bevorzugt 0,5 bis 45,0 Gew.-%, noch weiter bevorzugt 5,0 bis 40,0 Gew.-%, besonders bevorzugt 10,0 bis 40,0 Gew.-%, was heißt, dass der Anteil der Komponente a) durch die Komponente d) verringert wird.

Der Anteil an Dispergiermittel (Komponente b) beträgt vorzugsweise 1,0 bis 15,0 Gew.-%, weiter bevorzugt 2,0 bis 10,0 Gew.-% und ganz besonders bevorzugt 2,5 bis 8,0 Gew.-%.

Der Anteil an Wirkverbesserer c) in den erfindungsgemäßen Formulierungen beträgt 5,0 bis 95,0 Gew.-%, weiter bevorzugt 10,0 bis 90,0 Gew.-% und ganz besonders bevorzugt 20,0 bis 80,0 Gew.-%. Erfindungsgemäss ist der Wirkverbesserer ein Alkylpolysaccharid.

Der Anteil der Safener e) in den erfindungsgemäßen Formulierungen beträgt vorzugsweise von 0 bis 20 Gew.-%, bevorzugt 0 bis 15 Gew.-%, besonders bevorzugt 0 bis 10 Gew.-%,.

In einer alternativen Ausführungsform, die Safener zwingend enthält, beträgt der Anteil der Safener e) in den erfindungsgemäßen Formulierungen vorzugsweise von 0,01 bis 20 Gew.-%, bevorzugt 0,1 bis 15 Gew.-%, besonders bevorzugt 0,1 bis 10 Gew.-%,.

Der Anteil der Verdicker f) in den erfindungsgemäßen Formulierungen beträgt vorzugsweise von 0 bis 2,0 Gew.-%, bevorzugt 0,01 bis 1,00 Gew.-%, besonders bevorzugt 0,01 bis 0,60 Gew.-%, ganz besonders bevorzugt 0,04 bis 0,50 Gew.-% und ganz besonders bevorzugt 0,05 bis 0,3 Gew.-%.

Der Anteil der gegebenenfalls zugesetzten weiteren Hilfs- und Zusatzstoffe g) in den erfindungsgemäßen Dispersionen beträgt vorzugsweise 0 bis 20,0 Gew.-%, bevorzugt 1,0 bis 15,0 Gew.-%, weiter bevorzugt 3,0 bis 10,0 Gew.-%, und besonders bevorzugt 5,0 bis 10,0 Gew.-%.

Bei den oben genannten Anteilen der jeweiligen Inhaltsstoffe ist dem Fachmann klar, daß die Vorzugsbereiche der einzelnen Inhaltsstoffe frei miteinander kombiniert werden können, so daß auch diese Zusammensetzungen unterschiedlicher Vorzugsbereiche einzelner Inhaltsstoffe offenbart sein sollen. Besonders bevorzugt sind jedoch, sofern nichts anderes offenbart, Vorzugsbereiche gleicher Ebene, also z.B. alle bevorzugten oder besonders bevorzugten Bereiche, wobei eine spezielle Offenbarung diese allgemeinen Kombinationen nicht ersetzen, sondern ergänzen soll. Insbesondere bevorzugt ist eine Kombination der am stärksten bevorzugten (kleinsten) Vorzugsbereiche.

Dasselbe gilt für andere Angaben von Vorzugsbereichen an anderen Stellen der vorliegenden Beschreibung.

In einer bevorzugten Ausführungsform beträgt der Anteil der Komponente
a) 0,5 bis 55 Gew.-%
b) 1,0 bis 15 Gew.-%,
c) 5 bis 95 Gew.-%
d) 0%
e) 0%,
f) 0% bis 1,00 Gew.-%, und
g) 0 bis 20 Gew.-%,
wobei Wasser auf 100 Gew.% hinzuaddiert wird.

In einer weiter bevorzugten Ausführungsform beträgt der Anteil der Komponente
a) 0,5 bis 45 Gew.-%
b) 1,0 bis 15 Gew.-%,
c) 10 bis 90 Gew.-%
d) optional mindestens einen von a) verschiedenen agrochemischen Wirkstoff,
e) 0 bis 15,0 Gew.-%,
f) 0,01 bis 1,00 Gew.-%, und
g) 1 bis 15 Gew.-%,
wobei Wasser auf 100 Gew.% hinzuaddiert wird.

In einer weiteren bevorzugten Ausführungsform beträgt der Anteil der Komponente
a) 5 bis 40 Gew.-%,
b) 2,0 bis 10 Gew.-%,
c) 20 bis 80 Gew.-%
d) optional mindestens einen von a) verschiedenen agrochemischen Wirkstoff,
e) 0 bis 10,0 Gew.-%,
f) 0,01 bis 0,60 Gew.-%, und
g) 3,0 bis 10,0 Gew.-%,
wobei Wasser auf 100 Gew.% hinzuaddiert wird.

In einer weiteren bevorzugten Ausführungsform beträgt der Anteil der Komponente
a) 10 bis 40 Gew.-%
b) 2,50 bis 8,0 Gew.-%,
c) 20 bis 80 Gew.-%
d) mindestens einen von a) verschiedenen agrochemischen Wirkstoff,
e) 0 bis 10,0 Gew.-%,
f) 0,04 bis 0,50 Gew.-%, und
g) 5,0 bis 10,0 Gew.-%,
wobei Wasser auf 100 Gew.% hinzuaddiert wird.

In einer alternativen Ausführungsform beträgt der Anteil der Komponente
a) 10 bis 40 Gew.-%
b) 2,50 bis 8,0 Gew.-%,
c) 20 bis 80 Gew.-%
d) mindestens einen von a) verschiedenen agrochemischen Wirkstoff,
e) 0,1 bis 10,0 Gew.-%,
f) 0,04 bis 0,50 Gew.-%, und
g) 5,0 bis 10,0 Gew.-%,
wobei Wasser auf 100 Gew.% hinzuaddiert wird.

Dispergiermittel b) sind ionische oder nichtionische Tenside. Geeignete anionische Dispergiermittel b) wie Emulgatoren, Tenside, Netzmittel und Dispergatoren sind beispielweise Alkali-, Erdalkali- oder Ammoniumsalze von Sulfonaten, Sulfaten, Phosphaten, Carboxylaten und deren Mischungen wie z.B. die Salze der Alkylsulphonsäuren oder Alkylphosphorsäuren sowie Alkylarylsulphon- oder Alkylarylphosphorsäuren, Diphenylsulfonate, alpha-Olefinsulfonate, Ligninsulfonate, Sulfonate von Fettsäuren und Ölen, Sulfonate von ethoxylierten Alkylphenolen, Sulfonate von alkoxylierten Arylphenolen, Sulfonate von kondensierten Naphthalinen, Sulfonate von Dodecyl- und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen oder von Fettsäureestern. Beispiele für Phosphate sind Phosphatester. Beispiele fur Carboxylate sind Alkylcarboxylate sowie carboxylierte Alkohol- oder Alkylphenolethoxylate. Ebenfalls geeignet ist die Gruppe der anionischen Emulgatoren der Alkalimetall-, Erdalkalimetall- und Ammoniumsalze der Polystyrolsulfonsäuren, Salze der Polyvinylsulphonsäuren, Salze der Alkylnaphthalinsulphonsäuren, Salze von Alkylnaphthalinsulphonsäure-Formaldehyd Kondensationsprodukte, Salze von Kondensationsprodukte der Naphthalinsulphonsäure, Phenolsulphonsäure und Formaldehyd. Beispiele sind Kalziumdodecylbenzensulfonat wie Rhodocal^{®} 70/B (Solvay), Phenylsulfonat CA100 (Clariant) oder Isopropylammoniumdodecylbenzenesulfonate wie Atlox^{®} 3300B (Croda).

Weitere typische Vertreter sind unter anderem Soprophor^{®}-Typen (gegebenenfalls veresterte Derivate von Tristyrylphenoi-Ethoxylaten), Emulsogen^{®} 3510 (alkyliertes EO/PO Copolymerisat), Emulsogen^{®} EL 400 (ethoxyliertes Ricinusöl), Tween^{®}-Typen (fettacylierte Sorbitan-Ethoxylate), Calsogen^{®} AR 100 (Ca-Dodecylbenzolsulfonat). Bevorzugt sind Kombinationen aus Salzen alkylierter aromatischer Sulfonsäuren, wie Phenylsulfonat Ca und/oder Calsogen^{®} AR 100, mit alkylierten Copolymerisaten aus Ethylen- und Propylenoxid, wie Emulsogen^{®} 3510. Besonders bevorzugt sind Kombinationen aus Salzen der Dodecylbenzolsulfonsäure, wie Calsogen^{®} AR 1 00 mit alkyliertem Copolymerisat aus Ethylen- und Propylenoxid, wie Emulsogen^{®} 3510.

Beispiele für weitere anionische Emulgatoren b) aus der Gruppe der Naphthalinsulfonate sind Galoryl^{®} MT 800 (Natrium-Dibutylnaphthalinsulfonsäure), Morwet^{®} IP (Natriumdiisopropylnaphthalinsulfonat) und Nekal^{®} BX (Alkylnaphthalinsulfonat). Beispiele für anionische Tenside aus der Gruppe der Kondensationsprodukte von Naphthalinsulfonaten mit Formaldehyd sind Galoryl^{®} DT 201 (Naphthalinsulfonsäure Hydroxypolymer mit Formaldeyd und Methylphenol Natriumsalz), Galoryl^{®} DT 250 (Kondensationsprodukt aus Phenol- und Naphthalinsulfonaten), Reserve^{®} C (Kondensationsprodukt aus Phenol- und Naphthalinsulfonaten) oder Morwet^{®} D-425, Tersperse^{®} 2020. Bevorzugt sind 1,2 mit DiButyl- oder Di-Isobutyl-substituierte Naphthalinsulfonate, wie z.B. Produkte wie Galoryl^{®} MT 800 (CFPI-Nufarm) und Nekal^{®} BX (BASF). Weitere typische Tenside sind Soprophor^{®} 3D33, Soprophor^{®} 4D384, Soprophor^{®} BSU, Soprophor^{®} CY/8 (Solvay) und Hoe^{®} S3474 und in Form der Sapogenat^{®} T-Produkte (Clariant), beispielsweise Sapogenat^{®} T 100. Weitere typische Vertreter sind auf Basis von Lignin (wie Ligninsulfonate, Borresperse^{®}NA, REAX^{®} 88 oder Kraftsperse^{®} 25 S).

Von den oben genannten anionischen Dispergierhilfsmitteln b) werden vorzugsweise verschiedenen Sulfonate verwendet, besonders bevorzugt solche auf Naphthalinbasis.

Als nichtionische Dispergiermittel b) wie Emulgatoren, Netzmittel, Tenside und Dispergatoren kommen übliche, in Formulierungen von agrochemischen Wirkstoffen vorhandene oberflächenative Substanzen in Frage. Beispielhaft genannt seien ethoxylierte Nonylphenole, Umsetzungsprodukte von linearen oder verzweigten Alkoholen mit Ethylenoxid und/oder Propylenoxid, Ethylenoxid-Propylenoxid-Blockcopolymere, Endgruppen-verschlossene und nicht Endgruppen-verschlossene alkoxylierte lineare und verzweigte, gesättigte und ungesättigte Alkohole (z.B. Butoxypolyethylenpropylenglycole), Umsetzungsprodukte von Alkylphenolen mit Ethylenoxid und/oder Propylenoxid, Ethylenoxid-Propylenoxid-Blockcopolymere, Polyethylenglykole und Polypropylenglykole, weiterhin Fettsäureester, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristryl-phenolalkoxylate und Fettsäurepolyglykoletherester. Ganz besonders bevorzugt sind Tristyryl-phenol-ethoxylate, Tristyryl-phenol-ethoxy-propoxylate und Ricinusölpolyglykoletherestern, jeweils einzeln oder in Mischungen. Hinzu kommen gegebenenfalls Additive, wie Tenside oder Ester von Fettsäuren, die zur Verbesserung der biologischen Wirksamkeit beitragen. Geeignete nichtionische Emulgatoren b2) sind beispielsweise Soprophor^{®} 796/P, Lucramul^{®} CO 30, Lucramul^{®} HOT 5902, Lucramul^{®} PSI 100 oder Synperonic^{®} T304.

Geeignete nicht-ionische Dispergatoren b) können ebenfalls ausgewählt werden aus der Gruppe enthaltend Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, und partiell hydrolysiertem Vinylacetat, Phenolharze, modifizierte Cellulose Typen wie beispielsweise Luviskol^{®} (Polyvinylpyrrolidon), Mowiol^{®} (Polyvinylalkohol) oder modifizierte Cellulose. Bevorzugt sind Polyvinylpyrrolidon-Typen, besonders bevorzugt sind Typen von niedrigem Molekulargewicht wie Luviskol^{®} K30 oder Sokalan^{®} K30.

Als weitere nicht-ionische Emulgatoren b), die vorzugsweise verwendet werden, aus der Gruppe der Di- und Tri-block-copolymere aus Alkylenoxiden kommen z.B. Verbindungen in Frage, die auf Basis von Ethylen-und Propylenoxid aufgebaut sind, mit mittleren Molmassen zwischen 200 und 10000, bevorzugt 1000 bis 4000 g/mol, wobei der Massenanteil des polyethoxylierte Blocks zwischen 10 und 80% variiert, wie z.B. Synperonic^{®} PE-Reihe (CRODA), Pluronic^{®} PE-Reihe (BASF), VOP^{®} 32- oder Genapol^{®} PF-Reihe (Clariant). Die Molmassen werden, sofern nicht anders angegeben, mittels GPC mit Chloroform als Laufmittel und Polystyrol als Standard bestimmt.

Besonders bevorzugt werden als Dispergiermittel eine Kombination aus mindestens einem ionischen und einem nicht-ionischen Dispergiermittel verwendet.

Komponente c) betrifft die Gruppe umfassend die organisch modifizierten (poly)-Glycoside, organisch modifizierten Furanosen, organisch modifizierten Pyranosen, und organisch modifizierten Sorbitane und Sorbitole, sowie Mischungen daraus.

Die Gruppe der organisch modifizierten (poly)-Glycoside umfaßt weiter bevorzugt nicht-ionische Alkylpolysaccharide (z.B. Alkylpolyglucoside oder APG).

Erfindungsgemäss handelt es sich bei Komponente c) um ein Alkylpolysaccharid.

Geeignete Alkylpolysaccharide im Sinne der vorliegenden Erfindung weisen eine Struktur gemäß Formel (I) auf:

R⁵-O-(*su_{g}*)ᵤ (I),

wobei R5 ein unverzweigter oder verzweigter, optional substituierter oder unsubstituierter, Hydrocarbylrest ist, ausgewählt aus der Gruppe bestehend aus Alkyl, Alkenyl, Alkylphenyl und Alkenylphenyl, vorzugsweise mit 4 bis 22 Kohlenstoffatomen. Hierbei ist dem Fachmann geläufig, das Alkenylphenyl und Alkylphenyl einen mindestens 7 Kohlenstoffatome enthalten müssen.

Die su_{g}-Einheit ist ein Saccharid-Rest mit offener oder cyclischer (i.e. Pyranose / Furanose) Struktur. Der Saccharidrest ist vorzugsweise ausgewählt aus der Gruppe umfassend Monosaccharide, weiter bevorzugt Monosaccharide mit 5 oder 6 Kohlenstoffatomen, Disaccharide und Polysaccharide. Erfindungsgemäß geeignete Saccharid-Reste, einschließlich ihrer entsprechenden Pyranose- oder Furanose-Strukturen, umfassen vorzugsweise Ribose, Xylose, Arabinose, Glucose, Galactose, Mannose, Telose, Gulose, Allose, Altrose, Idose, Lyxose, Ribulose, Sorbose (Sorbitan), Fructose und deren Mischungen.

Erfindungsgemäß geeignete Disaccharid-Reste umfassen vorzugsweise Maltose, Lactose und Sucrose.

Disaccharid-, Oligosaccharid- und Polysaccharide können eine Zusammensetzung von zwei oder mehr gleichen Sacchariden sein, wobei zum Beispiel Maltose aus zwei Glucose-Einheiten aufgebaut ist, oder zwei oder mehr verschiedene Sacchariden, wobei zum Beispiel Sucrose aus Glucose und Fructose zusammengesetzt ist.

Der Grad der Polymerisierung von Oligo- und Polysacchariden, u, ist ein Durchschnittswert vorzugsweise von 1 bis 10, weiter bevorzugt von 1 bis 8, noch weiter bevorzugt von 1 zu 5, noch stärker bevorzugt von 1 bis 3, und besonders bevorzugt von 1 bis 2.

Wie dem Fachmann bekannt, und wie in der Formel (I) gezeigt, ist der Rest R⁵ an ein Sauerstoffatom der von der su_{g}-Einheit gebunden.

In einer bevorzugten Ausführungsformen kann das Alkylpolysaccharid ein Alkylpolyglycosid (APG) der Formel (I) sein, wobei R5 ein unverzweigter oder verzweigter Alkylrest ist mit vorzugsweise 4 bis 22 Kohlenstoffatomen, weiter bevorzugt 8 bis 18 Kohlenstoffatomen, noch weiter bevorzugt 8 bis 10 Kohlenstoffatomen, oder eine Mischung von Alkylgruppen mit einem Durchschnittswert an Kohlenstoffatomen, der in den zuvor gegebenen Bereichen liegt; und wobei su_{g} vorzugsweise ein Glucuso-Rest (z.B. ein Glucosid) ist, und wobei u vorzugsweise im Bereich von 1 -5, besonders bevorzugt von 1 bis 3 ist.

In einer weiter bevorzugten Ausführungsformen ist das Alkylpolysaccharid ein Alkylpolyglycosid (APG) der Formel (I) sein, wobei R5 ein unverzweigter oder verzweigter Alkylrest ist mit vorzugsweise 8 bis 10 Kohlenstoffatomen, oder eine Mischung von Alkylgruppen mit einem Durchschnittswert an Kohlenstoffatomen, der in den zuvor gegebenen Bereichen liegt; und wobei su_{g} vorzugsweise ein Glucuso-Rest (z.B. ein Glucosid) ist, und wobei u im Bereich von 1 bis 3 ist.

Beispiele für erfindungsgemäße Alkylpolysaccharide gemäß Formel (I) sind dem Fachmann bekannt und bevorzugte Verbindungen dieser Art sind im folgenden aufgelistet, wobei su_{g} gemäß in Formel (I) in diesen Verbindungen Glucose ist: : AGNIQUE^{®} PG8107-G, AGNIQUE^{®} PG 8107-U, AGNIQUE^{®} PG 9116, AGNIQUE^{®} PG 8105 U, AGNIQUE^{®} PG 8105 G, AGNIQUE PG^{®} 8105 C (alle erhältlich von BASF).

Alternativ beschrieben , jedoch nicht erfindungsgemäss, ist Komponente c) ausgewählt aus der Gruppe umfassend die organisch modifizierten Sorbitane und/oder Sorbitole.

Ein Beispiel für einen alkoxylierten Polysorbatester gemäß Formel (II) hat folgende Struktur: 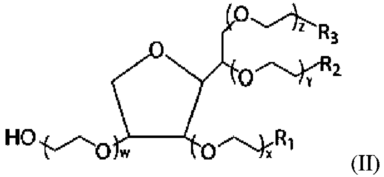 R1, R2 und R3 sind Fettsäurereste oder ein Hydroxylrest, wobei die Fettsäure vorzugsweise eine C10 bis C20-Fettsäure, weiter bevorzugt eine C12 bis C18-Fettsäure und besonders bevorzugt ausgewählt ist aus der Gruppe, die Ölsäure, Stearinsäure und Laurinsäure umfaßt. Die Substituenten R1 bis R3 können dabei gleich oder verschieden sein.

Vertreter dieser Klasse sind im Folgenden genannt, wobei Tween 80 besonders bevorzugt ist.
Tween 85: R1=R2=R3 = Ölsäure
Tween 80: R1=R2= OH; R3 = Ölsäure
Tween 60: R1=R2= OH; R3 = Stearinsäure
Tween 20: R1=R2= OH; R3 = Laurinsäure

Als Beispiel hierzu die Struktur von Tween^{®} 80: 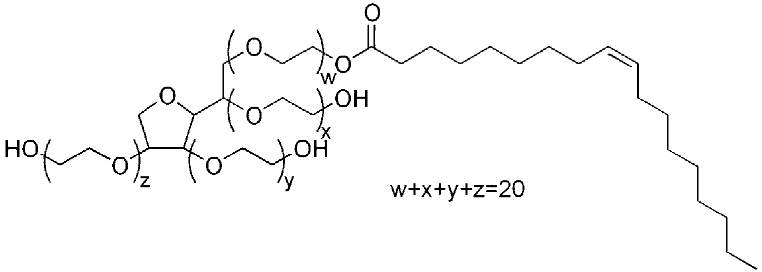 w, x, y und z sind ganze Zahlen, vorzugsweise von 0 bis 20, vorzugsweise 0 bis 15, weiter bevorzugt 0 bis 10, wobei 0 einer OH-Gruppe entspricht.

Alternativ können alle oder einzelne EO-Einheiten (Ethylenoxid wie in Formel II dargestellt) durch PO (Propylenoxid) ersetzt sein, z.B. Tween^{®} L-1505 (von CRODA) mit 15 EO- und 5 PO-Einheiten.

Beispiele von Adjuvantien von Struktur (II) sind den Fachmann bekannt, die entsprechenden Handelsprodukte sind im Folgenden aufgelistet:

| Produkt | Mol EO | Mol PO | Log P |
|---|---|---|---|
| Tween 21 | 4 | 0 | 2.71 |
| Tween 22 | 8 | 0 | 1.90 |
| Tween 23 | 12 | 0 | 1.08 |
| Tween 24 | 16 | 0 | 0.26 |
| Tween 20 | 20 | 0 | -0.55 |
| Tween 80 | 20 | 0 | 1.99 |
| Tween 60 | 20 | 0 | 2.48 |
| Tween 40 | 20 | 0 | 1.47 |
| Tween L-0515 | 5 | 15 | 7.44 |
| Tween L-1010 | 10 | 10 | 4.68 |
| Tween L-1505 | 15 | 5 | 1.92 |

Alternativ sind zu nennen Tween^{®} 80 und Tween^{®} L-1505.

Alternativ , jedoch nicht erfindungsgemäss, kann c) ausgewählt aus der Gruppe der organisch modifizierten (poly)-Glycoside sein.

Alternativ, jedoch nicht erfindungsgemäss, kann c) ausgewählt aus der Gruppe der alkoxylierten Polysorbatester gemäß Formel (II) sein.

Besonders bevorzugt weist das Adjuvant c) ferner einen LogP im Bereich von 0 bis 8, weiter bevorzugt von 0,1 bis 5, und besonders bevorzugt von 0,5 bis 4,0 auf.

Ganz besonders bevorzugt ist der logP +- 2 Einheiten größer oder kleiner als der logP des Wirkstoffes a). Von Komponente a) verschiedene agrochemische Wirkstoffe (Komponente d) sind Herbizide, Fungizide, Insektizide, Pflanzenwachstums-regulatoren, und dergleichen.

Fungizide Wirkstoffe sind z.B. 1) Inhibitoren der Ergosterol-Biosynthese, beispielsweise (1.001) Cyproconazol, (1.002) Difenoconazol, (1.003) Epoxiconazol, (1.004) Fenhexamid, (1.005) Fenpropidin, (1.006) Fenpropimorph, (1.007) Fenpyrazamin, (1.008) Fluquinconazol, (1.009) Flutriafol, (1.010) Imazalil, (1.011) Imazalil Sulfat, (1.012) Ipconazol, (1.013) Metconazol, (1.014) Myclobutanil, (1.015) Paclobutrazol, (1.016) Prochloraz, (1.017) Propiconazol, (1.018) Prothioconazol, (1.019) Pyrisoxazol, (1.020) Spiroxamin, (1.021) Tebuconazol, (1.022) Tetraconazol, (1.023) Triadimenol, (1.024) Tridemorph, (1.025) Triticonazol, (1.026) (1R,2S,5S)-5-(4-Chlorbenzyl)-2-(chlormethyl)-2-methyl-1-(1H-1,2,4-triazol-1-ylmethyl)cyclopentanol, (1.027) (1S,2R,5R)-5-(4-Chlorbenzyl)-2-(chlormethyl)-2-methyl-1-(1H-1,2,4-triazol-1-ylmethyl)cyclopentanol, (1.028) (2R)-2-(1-Chlorcyclopropyl)-4-[(1R)-2,2-dichlorcyclopropyl]-1-(1H-1,2,4-triazol-1-yl)butan-2-ol (1.029) (2R)-2-(1-Chlorcyclopropyl)-4-[(1S)-2,2-dichlorcyclopropyl]-1-(1H-1,2,4-triazol-1-yl)butan-2-ol, (1.030) (2R)-2-[4-(4-Chlorphenoxy)-2-(trifluormethyl)phenyl]-1-(1H-1,2,4-triazol-1-yl)propan-2-ol, (1.031) (2S)-2-(1-Chlorcyclopropyl)-4-[(1R)-2,2-dichlorcyclopropyl]-1-(1H-1,2,4-triazol-1-yl)butan-2-ol, (1.032) (2S)-2-(1-Chlorcyclopropyl)-4-[(1S)-2,2-dichlorcyclopropyl]-1-(1H-1,2,4-triazol-1-yl)butan-2-ol, (1.033) (2S)-2-[4-(4-Chlorphenoxy)-2-(trifluormethyl)phenyl]-1-(1H-1,2,4-triazol-1-yl)propan-2-ol, (1.034) (R)-[3-(4-Chlor-2-fluorphenyl)-5-(2,4-difluorphenyl)-1,2-oxazol-4-yl](pyridin-3-yl)methanol, (1.035) (S)-[3-(4-Chlor-2-fluorphenyl)-5-(2,4-difluorphenyl)-1,2-oxazol-4-yl](pyridin-3-yl)methanol, (1.036) [3-(4-Chlor-2-fluorphenyl)-5-(2,4-difluorphenyl)-1,2-oxazol-4-yl](pyridin-3-yl)methanol, (1.037) 1-({(2R,4S)-2-[2-Chlor-4-(4-chlorphenoxy)phenyl]-4-methyl-1,3-dioxolan-2-yl}methyl)-1H-1,2,4-triazol, (1.038) 1-({(2S,4S)-2-[2-Chlor-4-(4-chlorphenoxy)phenyl]-4-methyl-1,3-dioxolan-2-yl}methyl)-1H-1,2,4-triazol, (1.039) 1-{[3-(2-Chlorphenyl)-2-(2,4-difluorphenyl)oxiran-2-yl]methyl}-1H-1,2,4-triazol-5-yl-thiocyanat, (1.040) 1-{[rel(2R,3R)-3-(2-Chlorphenyl)-2-(2,4-difluorphenyl)oxiran-2-yl]methyl}-1H-1,2,4-triazol-5-yl-thiocyanat, (1.041) 1-{[rel(2R,3S)-3-(2-Chlorphenyl)-2-(2,4-difluorphenyl)oxiran-2-yl]methyl}-1H-1,2,4-triazol-5-yl-thiocyanat, (1.042) 2-[(2R,4R,5R)-1-(2,4-Dichlorphenyl)-5-hydroxy-2,6,6-trimethylheptan-4-yl]-2,4-dihydro-3H-1,2,4-triazol-3-thion, (1.043) 2-[(2R,4R,5S)-1-(2,4-Dichlorphenyl)-5-hydroxy-2,6,6-trimethylheptan-4-yl]-2,4-dihydro-3H-1,2,4-triazol-3-thion, (1.044) 2-[(2R,4S,5R)-1-(2,4-Dichlorophenyl)-5-hydroxy-2,6,6-trimethylheptan-4-yl]-2,4-dihydro-3H-1,2,4-triazol-3-thion, (1.045) 2-[(2R,4S,5S)-1-(2,4-Dichlorphenyl)-5-hydroxy-2,6,6-trimethylheptan-4-yl]-2,4-dihydro-3H-1,2,4-triazol-3-thion, (1.046) 2-[(2S,4R,5R)-1-(2,4-Dichlorphenyl)-5-hydroxy-2,6,6-trimethylheptan-4-yl]-2,4-dihydro-3H-1,2,4-triazol-3-thion, (1.047) 2-[(2S,4R,5S)-1-(2,4-Dichlorphenyl)-5-hydroxy-2,6,6-trimethylheptan-4-yl]-2,4-dihydro-3H-1,2,4-triazol-3-thion, (1.048) 2-[(2S,4S,5R)-1-(2,4-Dichlorphenyl)-5-hydroxy-2,6,6-trimethylheptan-4-yl]-2,4-dihydro-3H-1,2,4-triazol-3-thion, (1.049) 2-[(2S,4S,5S)-1-(2,4-Dichlorphenyl)-5-hydroxy-2,6,6-trimethylheptan-4-yl]-2,4-dihydro-3H-1,2,4-triazol-3-thion, (1.050) 2-[1-(2,4-Dichlorphenyl)-5-hydroxy-2,6,6-trimethylheptan-4-yl]-2,4-dihydro-3H-1,2,4-triazol-3-thion, (1.051) 2-[2-Chlor-4-(2,4-dichlorophenoxy)phenyl]-1-(1H-1,2,4-triazol-1-yl)propan-2-ol, (1.052) 2-[2-Chlor-4-(4-chlorphenoxy)phenyl]-1-(1H-1,2,4-triazol-1-yl)butan-2-ol, (1.053) 2-[4-(4-Chlorphenoxy)-2-(trifluormethyl)phenyl]-1-(1H-1,2,4-triazol-1-yl)butan-2-ol, (1.054) 2-[4-(4-Chlorphenoxy)-2-(trifluormethyl)phenyl]-1-(1H-1,2,4-triazol-1-yl)pentan-2-ol, (1.055) 2-[4-(4-Chlorphenoxy)-2-(trifluormethyl)phenyl]-1-(1H-1,2,4-triazol-1-yl)propan-2-ol, (1.056) 2-{[3-(2-Chlorphenyl)-2-(2,4-difluorphenyl)oxiran-2-yl]methyl}-2,4-dihydro-3H-1,2,4-triazol-3-thion, (1.057) 2-{[rel(2R,3R)-3-(2-Chlorphenyl)-2-(2,4-difluorphenyl)oxiran-2-yl]methyl}-2,4-dihydro-3H-1,2,4-triazol-3-thion, (1.058) 2-{[rel(2R,3S)-3-(2-Chlorphenyl)-2-(2,4-difluorphenyl)oxiran-2-yl] methyl}-2,4-dihydro-3H-1,2,4-triazol-3-thion, (1.059) 5-(4-Chlorbenzyl)-2-(chlormethyl)-2-methyl-1-(1H-1,2,4-triazol-1-ylmethyl)cyclopentanol, (1.060) 5-(Allylsulfanyl)-1-{[3-(2-chlorphenyl)-2-(2,4-difluorphenyl)oxiran-2-yl]methyl}-1H-1,2,4-triazol, (1.061) 5-(Allylsulfanyl)-1-{[rel(2R,3R)-3-(2-chlorphenyl)-2-(2,4-difluorphenyl)oxiran-2-yl]methyl}-1H-1,2,4-triazol, (1.062) 5-(Allylsulfanyl)-1-{[rel(2R,3S)-3-(2-chlorphenyl)-2-(2,4-difluorphenyl)oxiran-2-yl]methyl]-1H-1,2,4-triazol, (1.063) N'-(2,5-Dimethyl-4-{[3-(1,1,2,2-tetrafluorethoxy)phenyl]sulfanyl}phenyl)-N-ethyl-N-methylimidoformamid, (1.064) N'-(2,5-Dimethyl-4-{[3-(2,2,2-trifluorethoxy)phenyl]sulfanyl}phenyl)-N-ethyl-N-methylimidoformamid, (1.065) N'-(2,5-Dimethyl-4-{[3-(2,2,3,3-tetrafluorpropoxy)phenyl]sulfanyl}phenyl)-N-ethyl-N-methylimidoformamid, (1.066) N'-(2,5-Dimethyl-4-{[3-(pentafluorethoxy)phenyl]sulfanyl}phenyl)-N-ethyl-N-methylimidoformamid, (1.067) N'-(2,5-Dimethyl-4-{3-[(1,1,2,2-tetrafluorethyl)sulfanyl]phenoxy}phenyl)-N-ethyl-N-methylimidoformamid, (1.068) N'-(2,5-Dimethyl-4-{3-[(2,2,2-trifluorethyl)sulfanyl]phenoxy}phenyl)-N-ethyl-N-methylimidoformamid, (1.069) N'-(2,5-Dimethyl-4-{3-[(2,2,3,3-tetrafluorpropyl)sulfanyl]phenoxy}phenyl)-N-ethyl-N-methylimidoformamid, (1.070) N'-(2,5-Dimethyl-4-{3-[(pentafluorethyl)sulfanyl]phenoxy}phenyl)-N-ethyl-N-methylimidoformamid, (1.071) N'-(2,5-Dimethyl-4-phenoxyphenyl)-N-ethyl-N-methylimidoformamid, (1.072) N'-(4-{[3-(Difluormethoxy)phenyl]sulfanyl}-2,5-dimethylphenyl)-N-ethyl-N-methylimidoformamid, (1.073) N'-(4-{3-[(Difluormethyl)sulfanyl]phenoxy}-2,5-dimethylphenyl)-N-ethyl-N-methylimidoformamid, (1.074) N'-[5-Brom-6-(2,3-dihydro-1H-inden-2-yloxy)-2-methylpyridin-3-yl]-N-ethyl-N-methylimidoformamid, (1.075) N'-{4-[(4,5-Dichlor-1,3-thiazol-2-yl)oxy]-2,5-dimethylphenyl}-N-ethyl-N-methylimidoformamid, (1.076) N'-{5-Brom-6-[(1R)-1-(3,5-difluorophenyl)ethoxy]-2-methylpyridin-3-yl}-N-ethyl-N-methylimidoformamid, (1.077) N'-{5-Brom-6-[(1S)-1-(3,5-difluorphenyl)ethoxy]-2-methylpyridin-3-yl}-N-ethyl-N-methylimidoformamid, (1.078) N'-{5-Brom-6-[(cis-4-isopropylcyclohexyl)oxy]-2-methylpyridin-3-yl}-N-ethyl-N-methylimidoformamid, (1.079) N'-{5-Brom-6-[(trans-4-isopropylcyclohexyl)oxy]-2-methylpyridin-3-yl}-N-ethyl-N-methylimidoformamid, (1.080) N'-{5-Bromo-6-[1-(3,5-difluorphenyl)ethoxy]-2-methylpyridin-3-yl}-N-ethyl-N-methylimidoformamid, (1.081) Mefentrifluconazole, (1.082) Ipfentrifluconazole.

2) Inhibitoren der Atmungskette am Komplex I oder II beispielsweise (2.001) Benzovindiflupyr, (2.002) Bixafen, (2.003) Boscalid, (2.004) Carboxin, (2.005) Fluopyram, (2.006) Flutolanil, (2.007) Fluxapyroxad, (2.008) Furametpyr, (2.009) Isofetamid, (2.010) Isopyrazam (anti-epimeres Enantiomer 1R,4S,9S), (2.011) Isopyrazam (anti-epimeres Enantiomer 1S,4R,9R), (2.012) Isopyrazam (anti-epimeres Racemat 1RS,4SR,9SR), (2.013) Isopyrazam (Mischung des syn-epimeren Racemates 1RS,4SR,9RS und des antiepimeren Racemates 1RS,4SR,9SR), (2.014) Isopyrazam (syn-epimeres Enantiomer 1R,4S,9R), (2.015) Isopyrazam (syn-epimeres Enantiomer 1S,4R,9S), (2.016) Isopyrazam (syn-epimeres Racemat 1RS,4SR,9RS), (2.017) Penflufen, (2.018) Penthiopyrad, (2.019) Pydiflumetofen, (2.020) Pyraziflumid, (2.021) Sedaxane, (2.022) 1,3-Dimethyl-N-(1,1,3-trimethyl-2,3-dihydro-1H-inden-4-yl)-1H-pyrazol-4-carboxamid, (2.023) 1,3-Dimethyl-N-[(3R)-1,1,3-trimethyl-2,3-dihydro-1H-inden-4-yl]-1H-pyrazol-4-carboxamid, (2.024) 1,3-Dimethyl-N-[(3S)-1,1,3-trimethyl-2,3-dihydro-1H-inden-4-yl]-1H-pyrazol-4-carboxamid, (2.025) 1-Methyl-3-(trifluormethyl)-N-[2'-(trifluormethyl)biphenyl-2-yl]-1H-pyrazol-4-carboxamid, (2.026) 2-Fluor-6-(trifluoromethyl)-N-(1,1,3-trimethyl-2,3-dihydro-1H-inden-4-yl)benzamid, (2.027) 3-(Difluormethyl)-1-methyl-N-(1,1,3-trimethyl-2,3-dihydro-1H-inden-4-yl)-1H-pyrazol-4-carboxamid, (2.028) 3-(Difluormethyl)-1-methyl-N-[(3R)-1,1,3-trimethyl-2,3-dihydro-1H-inden-4-yl]-1H-pyrazol-4-carboxamid, (2.029) 3-(Difluormethyl)-1-methyl-N-[(3S)-1,1,3-trimethyl-2,3-dihydro-1H-inden-4-yl]-1H-pyrazol-4-carboxamid, (2.030) 3-(Difluormethyl)-N-(7-fluor-1,1,3-trimethyl-2,3-dihydro-1H-inden-4-yl)-1-methyl-1H-pyrazol-4-carboxamid, (2.031) 3-(Difluormethyl)-N-[(3R)-7-fluor-1,1,3-trimethyl-2,3-dihydro-1H-inden-4-yl]-1-methyl-1H-pyrazol-4-carboxamid, (2.032) 3-(Difluoromethyl)-N-[(3S)-7-fluor-1,1,3-trimethyl-2,3-dihydro-1H-inden-4-yl]-1-methyl-1H-pyrazol-4-carboxamid, (2.033) 5,8-Difluor-N-[2-(2-fluor-4-{[4-(trifluormethyl)pyridin-2-yl]oxy}phenyl)ethyl]quinazolin-4-amin, (2.034) N-(2-Cyclopentyl-5-fluorbenzyl)-N-cyclopropyl-3-(difluormethyl)-5-fluor-1-methyl-1H-pyrazol-4-carboxamid, (2.035) N-(2-tert-Butyl-5-methylbenzyl)-N-cyclopropyl-3-(difluormethyl)-5-fluor-1-methyl-1H-pyrazol-4-carboxamid, (2.036) N-(2-tert-Butylbenzyl)-N-cyclopropyl-3-(difluormethyl)-5-fluor-1-methyl-1H-pyrazol-4-carboxamid, (2.037) N-(5-Chlor-2-ethylbenzyl)-N-cyclopropyl-3-(difluormethyl)-5-fluor-1-methyl-1H-pyrazol-4-carboxamid, (2.038) N-(5-Chlor-2-isopropylbenzyl)-N-cyclopropyl-3-(difluormethyl)-5-fluor-1-methyl-1H-pyrazol-4-carboxamid, (2.039) N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid, (2.040) N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid, (2.041) N-[1-(2,4-Dichlorphenyl)-1-methoxypropan-2-yl]-3-(difluormethyl)-1-methyl-1H-pyrazol-4-carboxamid, (2.042) N-[2-Chlor-6-(trifluormethyl)benzyl]-N-cyclopropyl-3-(difluormethyl)-5-fluor-1-methyl-1H-pyrazol-4-carboxamid, (2.043) N-[3-Chlor-2-fluor-6-(trifluormethyl)benzyl]-N-cyclopropyl-3-(difluormethyl)-5-fluor-1-methyl-1H-pyrazol-4-carboxamid, (2.044) N-[5-Chlor-2-(trifluormethyl)benzyl]-N-cyclopropyl-3-(difluormethyl)-5-fluor-1-methyl-1H-pyrazol-4-carboxamid, (2.045) N-Cyclopropyl-3-(difluormethyl)-5-fluor-1-methyl-N-[5-methyl-2-(trifluormethyl)benzyl]-1H-pyrazol-4-carboxamid, (2.046) N-Cyclopropyl-3-(difluormethyl)-5-fluor-N-(2-fluor-6-isopropylbenzyl)-1-methyl-1H-pyrazol-4-carboxamid, (2.047) N-Cyclopropyl-3-(difluormethyl)-5-fluor-N-(2-isopropyl-5-methylbenzyl)-1-methyl-1H-pyrazol-4-carboxamid, (2.048) N-Cyclopropyl-3-(difluormethyl)-5-fluor-N-(2-isopropylbenzyl)-1-methyl-1H-pyrazol-4-carbothioamid, (2.049) N-Cyclopropyl-3-(difluoromethyl)-5-fluor-N-(2-isopropylbenzyl)-1-methyl-1H-pyrazol-4-carboxamid, (2.050) N-Cyclopropyl-3-(difluormethyl)-5-fluor-N-(5-fluor-2-isopropylbenzyl)-1-methyl-1H-pyrazol-4-carboxamid, (2.051) N-Cyclopropyl-3-(difluormethyl)-N-(2-ethyl-4,5-dimethylbenzyl)-5-fluor-1-methyl-1H-pyrazol-4-carboxamid, (2.052) N-Cyclopropyl-3-(difluormethyl)-N-(2-ethyl-5-fluorbenzyl)-5-fluor-1-methyl-1H-pyrazol-4-carboxamid, (2.053) N-Cyclopropyl-3-(difluormethyl)-N-(2-ethyl-5-methylbenzyl)-5-fluor-1-methyl-1H-pyrazole-4-carboxamid, (2.054) N-Cyclopropyl-N-(2-cyclopropyl-5-fluorbenzyl)-3-(difluormethyl)-5-fluor-1-methyl-1H-pyrazole-4-carboxamid, (2.055) N-Cyclopropyl-N-(2-cyclopropyl-5-methylbenzyl)-3-(difluormethyl)-5-fluor-1-methyl-1H-pyrazole-4-carboxamid, (2.056) N-Cyclopropyl-N-(2-cyclopropylbenzyl)-3-(difluormethyl)-5-fluor-1-methyl-1H-pyrazole-4-carboxamid.

3) Inhibitoren der Atmungskette am Komplex III, beispielsweise (3.001) Ametoctradin, (3.002) Amisulbrom, (3.003) Azoxystrobin, (3.004) Coumethoxystrobin, (3.005) Coumoxystrobin, (3.006) Cyazofamid, (3.007) Dimoxystrobin, (3.008) Enoxastrobin, (3.009) Famoxadon, (3.010) Fenamidon, (3.011) Flufenoxystrobin, (3.012) Fluoxastrobin, (3.013) Kresoxim-Methyl, (3.014) Metominostrobin, (3.015) Orysastrobin, (3.016) Picoxystrobin, (3.017) Pyraclostrobin, (3.018) Pyrametostrobin, (3.019) Pyraoxystrobin, (3.020) Trifloxystrobin (3.021) (2E)-2-{2-[({[(1E)-1-(3-{[(E)-1-Fluor-2-phenylvinyl]oxy}phenyl)ethyliden]amino}oxy)methyl]phenyl}-2-(methoxyimino)-N-methylacetamid, (3.022) (2E,3Z)-5-{[1-(4-Chlorphenyl)-1H-pyrazol-3-yl]oxy}-2-(methoxyimino)-N,3-dimethylpent-3-enamid, (3.023) (2R)-2-{2-[(2,5-Dimethylphenoxy)methyl]phenyl}-2-methoxy-N-methylacetamid, (3.024) (2S)-2-{2-[(2,5-Dimethylphenoxy)methyl]phenyl}-2-methoxy-N-methylacetamid, (3.025) (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl-2-methylpropanoat, (3.026) 2-{2-[(2,5-Dimethylphenoxy)methyl]phenyl}-2-methoxy-N-methylacetamid, (3.027) N-(3-Ethyl-3,5,5-trimethylcyclohexyl)-3-formamido-2-hydroxybenzamid, (3.028) (2E,3Z)-5-{[1-(4-Chlor-2-fluorphenyl)-1H-pyrazol-3-yl]oxy}-2-(methoxyimino)-N,3-dimethylpent-3-enamid, (3.029) Methyl {5-[3-(2,4-dimethylphenyl)-1H-pyrazol-1-yl]-2-methylbenzyl }carbamate.

4) Inhibitoren der Mitose und Zellteilung, beispielsweise (4.001) Carbendazim, (4.002) Diethofencarb, (4.003) Ethaboxam, (4.004) Fluopicolid, (4.005) Pencycuron, (4.006) Thiabendazol, (4.007) Thiophanat-Methyl, (4.008) Zoxamid, (4.009) 3-Chlor-4-(2,6-difluorphenyl)-6-methyl-5-phenylpyridazin, (4.010) 3-Chlor-5-(4-chlorphenyl)-4-(2,6-difluorphenyl)-6-methylpyridazin, (4.011) 3-Chlor-5-(6-chlorpyridin-3-yl)-6-methyl-4-(2,4,6-trifluorphenyl)pyridazin, (4.012) 4-(2-Brom-4-fluorphenyl)-N-(2,6-difluorphenyl)-1,3-dimethyl-1H-pyrazol-5-amin, (4.013) 4-(2-Brom-4-fluorphenyl)-N-(2-brom-6-fluorphenyl)-1,3-dimethyl-1H-pyrazol-5-amin, (4.014) 4-(2-Brom-4-fluorphenyl)-N-(2-bromphenyl)-1,3-dimethyl-1H-pyrazol-5-amin, (4.015) 4-(2-Brom-4-fluorphenyl)-N-(2-chlor-6-fluorphenyl)-1,3-dimethyl-1H-pyrazol-5-amin, (4.016) 4-(2-Brom-4-fluorphenyl)-N-(2-chlorphenyl)-1,3-dimethyl-1H-pyrazol-5-amin, (4.017) 4-(2-Brom-4-fluorphenyl)-N-(2-fluorphenyl)-1,3-dimethyl-1H-pyrazol-5-amin, (4.018) 4-(2-Chlor-4-fluorphenyl)-N-(2,6-difluorphenyl)-1,3-dimethyl-1H-pyrazol-5-amin, (4.019) 4-(2-Chlor-4-fluorphenyl)-N-(2-chlor-6-fluorphenyl)-1,3-dimethyl-1H-pyrazol-5-amin, (4.020) 4-(2-Chlor-4-fluorphenyl)-N-(2-chlorphenyl)-1,3-dimethyl-1H-pyrazol-5-amin, (4.021) 4-(2-Chlor-4-fluorphenyl)-N-(2-fluorphenyl)-1,3-dimethyl-1H-pyrazol-5-amin, (4.022) 4-(4-Chlorphenyl)-5-(2,6-difluorphenyl)-3,6-dimethylpyridazin, (4.023) N-(2-Brom-6-fluorphenyl)-4-(2-chlor-4-fluorphenyl)-1,3-dimethyl-1H-pyrazol-5-amin, (4.024) N-(2-Bromphenyl)-4-(2-chlor-4-fluorphenyl)-1,3-dimethyl-1H-pyrazol-5-amin, (4.025) N-(4-Chlor-2,6-difluorphenyl)-4-(2-chlor-4-fluorphenyl)-1,3-dimethyl-1H-pyrazol-5-amin.

5) Verbindungen mit Befähigung zu Multisite-Aktivität, beispielsweise (5.001) Bordeauxmischung, (5.002) Captafol, (5.003) Captan, (5.004) Chlorthalonil, (5.005) Kupferhydroxid, (5.006) Kupfernaphthenat, (5.007) Kupferoxid, (5.008) Kupferoxychlorid, (5.009) Kupfer(2+)-sulfat, (5.010) Dithianon, (5.011) Dodin, (5.012) Folpet, (5.013) Mancozeb, (5.014) Maneb, (5.015) Metiram, (5.016) Zinkmetiram, (5.017) Kupfer-Oxin, (5.018) Propineb, (5.019) Schwefel und Schwefelzubereitungen einschließlich Calciumpolysulfid, (5.020) Thiram, (5.021) Zineb, (5.022) Ziram, (5.023) 6-Ethyl-5,7-dioxo-6,7-dihydro-5H-pyrrolo[3',4':5,6][1,4]dithiino[2,3-c][1,2]thiazole-3-carbonitrile.

6) Verbindungen, die zum Auslösen einer Wirtsabwehr befähigt sind, beispielsweise (6.001) Acibenzolar-S-Methyl, (6.002) Isotianil, (6.003) Probenazol, (6.004) Tiadinil.

7) Inhibitoren der Aminosäure- und/oder Protein-Biosynthese, beispielsweise (7.001) Cyprodinil, (7.002) Kasugamycin, (7.003) Kasugamycinhydrochlorid-hydrat, (7.004) Oxytetracyclin (7.005) Pyrimethanil, (7.006) 3-(5-Fluor-3,3,4,4-tetramethyl-3,4-dihydroisochinolin-1-yl)chinolin.

(8) Inhibitoren der ATP-Produktion, beispielsweise (8.001) Silthiofam.

9) Inhibitoren der Zellwandsynthese, beispielsweise (9.001) Benthiavalicarb, (9.002) Dimethomorph, (9.003) Flumorph, (9.004) Iprovalicarb, (9.005) Mandipropamid, (9.006) Pyrimorph, (9.007) Valifenalat, (9.008) (2E)-3-(4-tert.-Butylphenyl)-3-(2-chlorpyridin-4-yl)-1-(morpholin-4-yl)prop-2-en-1-on, (9.009) (2Z)-3-(4-tert.-Butylphenyl)-3-(2-chlorpyridin-4-yl)-1-(morpholin-4-yl)prop-2-en-1-on.

10) Inhibitoren der Lipid- und Membran-Synthese, beispielsweise (10.001) Propamocarb, (10.002) Propamocarbhydrochlorid, (10.003) Tolclofos-Methyl.

11) Inhibitoren der Melanin-Biosynthese, beispielsweise (11.001) Tricyclazol, (11.002) 2,2,2-Trifluorethyl-{3-methyl-1-[(4-methylbenzoyl)amino]butan-2-yl}carbamat.

12) Inhibitoren der Nukleinsäuresynthese, beispielsweise (12.001) Benalaxyl, (12.002) Benalaxyl-M (Kiralaxyl), (12.003) Metalaxyl, (12.004) Metalaxyl-M (Mefenoxam).

13) Inhibitoren der Signaltransduktion, beispielsweise (13.001) Fludioxonil, (13.002) Iprodion, (13.003) Procymidon, (13.004) Proquinazid, (13.005) Quinoxyfen, (13.006) Vinclozolin.

14) Verbindungen, die als Entkoppler wirken können, beispielsweise (14.001) Fluazinam, (14.002) Meptyldinocap.

15) Weitere Verbindungen, beispielsweise (15.001) Abscisinsäure, (15.002) Benthiazol, (15.003) Bethoxazin, (15.004) Capsimycin, (15.005) Carvon, (15.006) Chinomethionat, (15.007) Cufraneb, (15.008) Cyflufenamid, (15.009) Cymoxanil, (15.010) Cyprosulfamid, (15.011) Flutianil, (15.012) Fosetyl-Aluminium, (15.013) Fosetyl-Calcium, (15.014) Fosetyl-Natrium, (15.015) Methylisothiocyanat, (15.016) Metrafenon, (15.017) Mildiomycin, (15.018) Natamycin, (15.019) Nickel-Dimethyldithiocarbamat, (15.020) Nitrothal-Isopropyl, (15.021) Oxamocarb, (15.022) Oxathiapiprolin, (15.023) Oxyfenthiin, (15.024) Pentachlorphenol und Salze, (15.025) Phosphonsäure und deren Salze, (15.026) Propamocarbfosetylat, (15.027) Pyriofenone (Chlazafenone) (15.028) Tebufloquin, (15.029) Tecloftalam, (15.030) Tolnifanide, (15.031) 1-(4-{4-[(5R)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, (15.032) 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, (15.033) 2-(6-Benzylpyridin-2-yl)quinazolin, (15.034) 2,6-Dimethyl-1H,5H-[1,4]dithiino[2,3-c:5,6-c']dipyrrol-1,3,5,7(2H,6H)-tetron, (15.035) 2-[3,5-Bis(difluormethyl)-1H-pyrazol-1-yl]-1-[4-(4-{5-[2-(prop-2-in-1-yloxy)phenyl]-4,5-dihydro-1,2-oxazol-3-yl}-1,3-thiazol-2-yl)piperidin-1-yl]ethanon, (15.036) 2-[3,5-Bis(difluormethyl)-1H-pyrazol-1-yl]-1-[4-(4-{5-[2-chlor-6-(prop-2-in-1-yloxy)phenyl]-4,5-dihydro-1,2-oxazol-3-yl}-1,3-thiazol-2-yl)piperidin-1-yl]ethanon, (15.037) 2-[3,5-Bis(difluormethyl)-1H-pyrazol-1-yl]-1-[4-(4-{5-[2-fluor-6-(prop-2-in-1-yloxy)phenyl]-4,5-dihydro-1,2-oxazol-3-yl}-1,3-thiazol-2-yl)piperidin-1-yl]ethanon, (15.038) 2-[6-(3-Fluor-4-methoxyphenyl)-5-methylpyridin-2-yl]quinazolin, (15.039) 2-{(5R)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl methanesulfonat, (15.040) 2-{(5S)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl methanesulfonat, (15.041) 2-{2-[(7,8-Difluor-2-methylquinolin-3-yl)oxy]-6-fluorphenyl}propan-2-ol, (15.042) 2-{2-Fluor-6-[(8-fluor-2-methylquinolin-3-yl)oxy]phenyl}propan-2-ol, (15.043) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl-methansulfonat, (15.044) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}phenyl methanesulfonat, (15.045) 2-Phenylphenol und deren Salze, (15.046) 3-(4,4,5-Trifluor-3,3-dimethyl-3,4-dihydroisoquinolin-1-yl)quinolin, (15.047) 3-(4,4-Difluor-3,3-dimethyl-3,4-dihydroisoquinolin-1-yl)quinolin, (15.048) 4-Amino-5-fluorpyrimidin-2-ol (Tautomere Form: 4-Amino-5-fluorpyrimidin-2(1H)-on), (15.049) 4-Oxo-4-[(2-phenylethyl)amino]buttersäure, (15.050) 5-Amino-1,3,4-thiadiazol-2-thiol, (15.051) 5-Chlor-N'-phenyl-N'-(prop-2-yn-1-yl)thiophen-2-sulfonohydrazid, (15.052) 5-Fluor-2-[(4-fluorbenzyl)oxy]pyrimidin-4-amin, (15.053) 5-Fluor-2-[(4-methylbenzyl)oxy]pyrimidin-4-amin, (15.054) 9-Fluor-2,2-dimethyl-5-(quinolin-3-yl)-2,3-dihydro-1,4-benzoxazepin, (15.055) But-3-yn-1-yl {6-[({[(Z)-(1-methyl-1H-tetrazol-5-yl)(phenyl)methylen]amino}oxy)methyl]pyridin-2-yl}carbamat, (15.056) Ethyl (2Z)-3-amino-2-cyano-3-phenylacrylat, (15.057) Phenazin-1-carbonsäure, (15.058) Propyl 3,4,5-trihydroxybenzoat, (15.059) Quinolin-8-ol, (15.060) Quinolin-8-ol sulfat (2:1), (15.061) tert-Butyl {6-[({[(1-methyl-1H-tetrazol-5-yl)(phenyl)methylene]amino]oxy)methyl]pyridin-2-yl]carbamat, (15.062) 5-Fluor-4-imino-3-methyl-1-[(4-methylphenyl)sulfonyl]-3,4-dihydropyrimidin-2(1H)-one.Insektizide Wirkstoffe sind beispielsweise :
(1) Acetylcholinesterase (AChE) Inhibitoren, wie beispielsweise Carbamate, z.B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb oder organophosphate, z.B. Acephate, Azamethiphos, Azinphos-ethyl, Azinphos-methyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
(2) GABA-gesteuerte Chlorid-Kanal-Antagonisten, wie beispielsweise Cyclodien-organochlorine, z.B. Chlordane und Endosulfan oder Phenylpyrazole (Fiprole), z.B. Ethiprole und Fipronil.
(3) Natrium-Kanal-Modulatoren / Spannungsabhängige Natrium-Kanal-Blocker, wie beispielsweise Pyrethroide, z.B. Acrinathrin, Allethrin, d-cis-trans Allethrin, d-trans Allethrin, Bifenthrin, Bioallethrin, Bioallethrin S-cyclopentenyl Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomere], Deltamethrin, Empenthrin [(EZ)-(1R)-Isomere), Esfenvalerate, Etofenprox, Fenpropathrin, Fenvalerate, Flucythrinate, Flumethrin, tau-Fluvalinate, Halfenprox, Imiprothrin, Kadethrin, Momfluorothrin, Permethrin, Phenothrin [(1R)-trans-Isomer), Prallethrin, Pyrethrine (pyrethrum), Resmethrin, Silafluofen, Tefluthrin, Tetramethrin, Tetramethrin [(1R)- Isomere)], Tralomethrin und Transfluthrin oder DDT oder Methoxychlor.
(4) Nikotinerge Acetylcholin-Rezeptor (nAChR) Agonisten, wie beispielsweise Neonikotinoide, z.B. Acetamiprid, Clothianidin, Dinotefuran, Imidacloprid, Nitenpyram, Thiacloprid und Thiamethoxam oder Nikotin oder Sulfoxaflor oder Flupyradifurone.
(5) Nikotinerge Acetylcholin-Rezeptor (nAChR) allosterische Aktivatoren, wie beispielsweise Spinosine, z.B. Spinetoram und Spinosad.
(6) Chlorid-Kanal-Aktivatoren, wie beispielsweise Avermectine/Milbemycine, z.B. Abamectin, Emamectin-benzoat, Lepimectin und Milbemectin.
(7) Juvenilhormon-Imitatoren, wie beispielsweise Juvenilhormon-Analoge, z.B. Hydroprene, Kinoprene und Methoprene oder Fenoxycarb oder Pyriproxyfen.
(8) Wirkstoffe mit unbekannten oder nicht spezifischen Wirkmechanismen, wie beispielsweise Alkylhalide, z.B. Methylbromid und andere Alkylhalide; oderChloropicrin oder Sulfurylfluorid oder Borax oder Brechweinstein.
(9) Selektive Fraßhemmer, z.B. Pymetrozine oder Flonicamid.
(10) Milbenwachstumsinhibitoren, z.B. Clofentezine, Hexythiazox und Diflovidazin oder Etoxazole.
(11) Mikrobielle Disruptoren der Insektendarmmembran, z.B. Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und BT Pflanzenproteine: Cry1Ab, Cry1Ac, Cry1Fa, Cry2Ab, mCry3A, Cry3Ab, Cry3Bb, Cry34/35Ab1.
(12) Inhibitoren der oxidativen Phosphorylierung, ATP-Disruptoren, wie beispielsweise Diafenthiuron oder organozinnverbindungen, z.B. Azocyclotin, Cyhexatin und Fenbutatin-oxid oder Propargite oder Tetradifon.
(13) Entkoppler der oxidativen Phoshorylierung durch Unterbrechung des H-Protongradienten, wie beispielsweise Chlorfenapyr, DNOC und Sulfluramid.
(14) Nikotinerge Acetylcholin-Rezeptor-Antagonisten, wie beispielsweise Bensultap, Cartap-hydrochlorid, Thiocyclam und Thiosultap-Natrium.
(15) Inhibitoren der Chitinbiosynthese, Typ 0, wie beispielsweise Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1, wie beispielsweise Buprofezin.
(17) Häutungsstörende Wirkstoffe, Dipteran, wie beispielsweise Cyromazine.
(18) Ecdyson-Rezeptor Agonisten, wie beispielsweise Chromafenozide, Halofenozide, Methoxyfenozide und Tebufenozide.
(19) Oktopaminerge Agonisten, wie beispielsweise Amitraz.
(20) Komplex-III-Elektronentransportinhibitoren, wie beispielsweise Hydramethylnon oder Acequinocyl oder Fluacrypyrim.
(21) Komplex-I-Elektronentransportinhibitoren, beispielsweise METI-Akarizide, z.B. Fenazaquin, Fenpyroximate, Pyrimidifen, Pyridaben, Tebufenpyrad und Tolfenpyrad oder Rotenone (Derris).
(22) Spannungsabhängige Natriumkanal-Blocker, z.B. Indoxacarb oder Metaflumizone.
(23) Inhibitoren der Acetyl-CoA-Carboxylase, wie beispielsweise Tetron- und Tetramsäurederivate, z.B. Spirobudiclofen, Spirodiclofen, Spiromesifen und Spirotetramat.
(24) Komplex-IV-Elektronentransportinhibitoren, wie beispielsweise Phosphine, z.B. Aluminiumphosphid, Calciumphosphid, Phosphin und Zinkphosphid oder Cyanid.
(25) Komplex-II-Elektronentransportinhibitoren, wie beispielsweise Cyenopyrafen und Cyflumetofen.
(28) Ryanodinrezeptor-Effektoren, wie beispielsweise Diamide, z.B. Chlorantraniliprole, Cyantraniliprole, Flubendiamide und Tetrachloroantraniliprole.

Weitere insektizide Wirkstoffe mit unbekanntem oder nicht eindeutigem Wirkmechanismus, wie beispielsweise Afidopyropen, Afoxolaner, Azadirachtin, Benclothiaz, Benzoximate, Bifenazate, Broflanilide, Bromopropylate, Chinomethionat, Cryolite, Cyclaniliprole, Cycloxaprid, Cyhalodiamide Dicloromezotiaz, Dicofol, Diflovidazin, Flometoquin, Fluazaindolizine, Fluensulfone, Flufenerim, Flufenoxystrobin, Flufiprole, Fluhexafon, Fluopyram, Fluralaner, Fluxametamide, Fufenozide, Guadipyr, Heptafluthrin, Imidaclothiz, Iprodione, Lotilaner, Meperfluthrin, Paichongding, Pyflubumide, Pyridalyl, Pyrifluquinazon, Pyriminostrobin, Sarolaner, Tetramethylfluthrin, Tetraniliprole, Tetrachlorantraniliprole, Tioxazafen, Thiofluoximate, Triflumezopyrim und Iodmethane; des Weiteren Präparate auf Basis von Bacillus firmus (I-1582, BioNeem, Votivo) , sowie folgende bekannte wirksame Verbindungen: 1-{2-Fluor-4-methyl-5-[(2,2,2-trifluorethyl)sulfinyl]phenyl}-3-(trifluormethyl)-1H-1,2,4-triazol-5-amin (bekannt aus WO2006/043635), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (bekannt aus WO2003/106457), 2-Chlor-N-[2-{1-[(2E)-3-(4-chlorphenyl)prop-2-en-1-yl]piperidin-4-yl}-4-(trifluormethyl)phenyl]isonicotinamid (bekannt aus WO2006/003494), 3-(2,5-Dimethylphenyl)-4-hydroxy-8-methoxy-1,8-diazaspiro[4.5]dec-3-en-2-on (bekannt aus WO2009/049851), 3-(2,5-Dimethylphenyl)-8-methoxy-2-oxo-1,8-diazaspiro[4.5]dec-3-en-4-yl-ethylcarbonat (bekannt aus WO2009/049851), 4-(But-2-in-1-yloxy)-6-(3,5-dimethylpiperidin-1-yl)-5-fluorpyrimidin (bekannt aus WO2004/099160), 4-(But-2-in-1-yloxy)-6-(3-chlorphenyl)pyrimidin (bekannt aus WO2003/076415), PF1364 (CAS-Reg.No. 1204776-60-2), Methyl-2-[2-({[3-brom-1-(3-chlorpyridin-2-yl)-1H-pyrazol-5-yl]carbonyl}amino)-5-chlor-3-methylbenzoyl]-2-methylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-ethylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl1]-2-methylhydrazincarboxylat (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-2-ethylhydrazincarboxylat (bekannt aus WO2005/085216), N-[2-(5-Amino-1,3,4-thiadiazol-2-yl)-4-chlor-6-methylphenyl]-3-brom-1-(3-chlorpyridin-2-yl)-1H-pyrazol-5-carboxamid (bekannt aus CN102057925), 4-[5-(3,5-Dichlorphenyl)-5-(trifluormethyl)-4,5-dihydro-1,2-oxazol-3-yl]-2-methyl-N-(1-oxidothietan-3-yl)benzamid (bekannt aus WO2009/080250), N-[(2E)-1-[(6-Chlorpyridin-3-yl)methyl]pyridin-2(1H)-yliden]-2,2,2-trifluoracetamid (bekannt aus WO2012/029672), 1-[(2-Chlor-1,3-thiazol-5-yl)methyl]-4-oxo-3-phenyl-4H-pyrido[1,2-a]pyrimidin-1-ium-2-olat (bekannt aus WO2009/099929), 1-[(6-Chlorpyridin-3-yl)methyl]-4-oxo-3-phenyl-4H-pyrido[1,2-a]pyrimidin-1-ium-2-olat (bekannt aus WO2009/099929), 4-(3-{2,6-Dichlor-4-[(3,3-dichlorprop-2-en-1-yl)oxy]phenoxy}propoxy)-2-methoxy-6-(trifluormethyl)pyrimidin (bekannt aus CN101337940), N-[2-(tert-Butylcarbamoyl)-4-chlor-6-methylphenyl]-1-(3-chlorpyridin-2-yl)-3-(fluormethoxy)-1H-pyrazol-5-carboxamid (bekannt aus WO2008/134969), Butyl-[2-(2,4-dichlorphenyl)-3-oxo-4-oxaspiro[4.5]dec-1-en-1-yl]-carbonat (bekannt aus CN 102060818), 3E)-3-[1-[(6-Chlor-3-pyridyl)methyl]-2-pyridyliden]-1,1,1-trifluor-propan-2-on (bekannt aus WO2013/144213), N-(Methylsulfonyl)-6-[2-(pyridin-3-yl)-1,3-thiazol-5-yl]pyridin-2-carboxamid (bekannt aus WO2012/000896), N-[3-(Benzylcarbamoyl)-4-chlorphenyl]-1-methyl-3-(pentafluorethyl)-4-(trifluormethyl)-1H-pyrazol-5-carboxamid (bekannt aus WO2010/051926), 5-Brom-4-chlor-N-[4-chlor-2-methyl-6-(methylcarbamoyl)phenyl]-2-(3-chlor-2-pyridyl)pyrazole-3-carboxamid (bekannt aus CN103232431), Tioxazafen, 4-[5-(3,5-Dichlorphenyl)-4,5-dihydro-5-(trifluormethyl)-3-isoxazolyl]-2-methyl-N-(cis-1-oxido-3-thietanyl)-benzamid, 4-[5-(3,5-Dichlorphenyl)-4,5-dihydro-5-(trifluormethyl)-3-isoxazolyl]-2-methyl-N-(trans-1-oxido-3-thietanyl)-benzamid und 4-[(5S)-5-(3,5-Dichlorphenyl)-4,5-dihydro-5-(trifluormethyl)-3-isoxazolyl]-2-methyl-N-(cis-1-oxido-3-thietanyl)benzamid (bekannt aus WO 2013050317 A1), N-[3-Chlor-1-(3-pyridinyl)-1H-pyrazol-4-yl]-N-ethyl-3-[(3,3,3-trifluorpropyl)sulfinyl]-propanamid, (+)-N-[3-Chlor-1-(3-pyridinyl)-1H-pyrazol-4-yl]-N-ethyl-3-[(3,3,3-trifluorpropyl)sulfinyl]-propanamid und (-)-N-[3-Chlor-1-(3-pyridinyl)-1H-pyrazol-4-yl]-N-ethyl-3-[(3,3,3-trifluorpropyl)sulfinyl]-propanamid (bekannt aus WO 2013162715 A2, WO 2013162716 A2, US 20140213448 A1), 5-[[(2E)-3-Chlor-2-propen-1-yl]amino]-1-[2,6-dichlor-4-(trifluoromethyl)phenyl]-4-[(trifluormethyl)sulfinyl]-1H-pyrazol-3-carbonitril (bekannt aus CN 101337937 A), 3-Brom-N-[4-chlor-2-methyl-6-[(methylamino)thioxomethyl]phenyl]-1-(3-chlor-2-pyridinyl)-1H-pyrazol-5-carboxamid, (Liudaibenjiaxuanan, bekannt aus CN 103109816 A); N-[4-Chlor-2-[[(1,1-dimethylethyl)amino]carbonyl]-6-methylphenyl]-1-(3-chlor-2-pyridinyl)-3-(fluormethoxy)-1H-pyrazol-5-carboxamid (bekannt aus WO 2012034403 A1), N-[2-(5-Amino-1,3,4-thiadiazol-2-yl)-4-chlor-6-methylphenyl]-3-brom-1-(3-chlor-2-pyridinyl)-1H-pyrazol-5-carboxamid (bekannt aus WO 2011085575 A1), 4-[3-[2,6-Dichlor-4-[(3,3-dichlor-2-propen-1-yl)oxy]phenoxy]propoxy]-2-methoxy-6-(trifluormethyl)-pyrimidin (bekannt aus CN 101337940 A); (2E)- und 2(Z)-2-[2-(4-Cyanophenyl)-1-[3-(trifluormethyl)phenyl]ethylidene]-N-[4-(difluormethoxy)phenyl]-hydrazine-carboxamid (bekannt aus CN 101715774 A); 3-(2,2-Dichloroethenyl)-2,2-dimethyl-4-(1H-benzimidazol-2-yl)phenyl-cyclopropan-carbonsäureester (bekannt aus CN 103524422 A); (4aS)-7-Chlor-2,5-dihydro-2-[[(methoxycarbonyl)[4-[(trifluormethyl)thio]phenyl]amino]carbonyl]-indeno[1,2-e][1,3,4]oxadiazine-4a(3H)-carbosäuremethylester (bekannt aus CN 102391261 A).

Beispiele für herbiziden Mischungspartner sind:
Acetochlor, acifluorfen, acifluorfen-sodium, aclonifen, alachlor, allidochlor, alloxydim, alloxydimsodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlorpotassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bromacil, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenac-sodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, cinidon, cinidon-ethyl, cinosulfuron, clacyfos, clethodim, clodinafop, clodinafop-propargyl, clomeprop, clopyralid, cloransulam, cloransulammethyl, cumyluron, cyanamide, cyanazine, cycloate, cyclopyrimorate, cyclosulfamuron, cycloxydim, cyhalofop, cyhalofop-butyl, cyprazine, 2,4-D, 2,4-D-butotyl, -butyl, -dimethylammonium, -diolamin, - ethyl, 2-ethylhexyl, -isobutyl, -isooctyl, -isopropylammonium, -potassium, -triisopropanolammonium und -trolamine, 2,4-DB, 2,4-DB-butyl, -dimethylammonium, isooctyl, -potassium und -sodium, daimuron (dymron), dalapon, dazomet, n-decanol, desmedipham, detosyl-pyrazolate (DTP), dicamba, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenzopyr, diflufenzopyr-sodium, dimefuron, dimepiperate, dimethachlor, dimethametryn, dimetrasulfuron, dinitramine, dinoterb, diphenamid, diquat, diquat-dibromid, dithiopyr, diuron, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-9600, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dion, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenpyr, flufenpyr-ethyl, flumetsulam, flumiclorac, flumiclorac-pentyl, flumioxazin, fluometuron, flurenol, flurenol-butyl, -dimethylammonium und -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, -dimethylammonium, -potassium, -sodium und -trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(Dimethoxyphosphoryl)-ethyl-(2,4-dichlorphenoxy)acetat, imazamethabenz, Imazamethabenz-methyl, imazamox, imazamox-ammonium, imazapic, imazapic-ammonium, imazapyr, imazapyrisopropylammonium, imazaquin, imazaquin-ammonium, imazethapyr, imazethapyr-immonium, imazosulfuron, indanofan, indaziflam, iodosulfuron, iodosulfuron-methyl-sodium, ioxynil, ioxyniloctanoate, -potassium und sodium, ipfencarbazone, isoproturon, isouron, isoxaben, isoxaflutole, karbutilate, KUH-043, i.e. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, ketospiradox, lactofen, lenacil, linuron, MCPA, MCPA-butotyl, -dimethylammonium, -2-ethylhexyl, -isopropylammonium, -potassium und - sodium, MCPB, MCPB-methyl, -ethyl und -sodium, mecoprop, mecoprop-sodium, und -butotyl, mecoprop-P, mecoprop-P-butotyl, -dimethylammonium, -2-ethylhexyl und -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinat, monolinuron, monosulfuron, monosulfuron-ester, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, neburon, nicosulfuron, nonanoic acid (Pelargonsäure), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, SL-261, sulcotrion, sulfentrazone, sulfometuron, sulfometuron-methyl, sulfosulfuron, , SYN-523, SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (Trifluoressigsäure), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazonemethyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, sowie die folgenden Verbindungen:

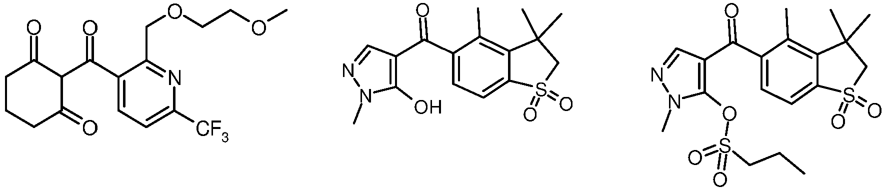

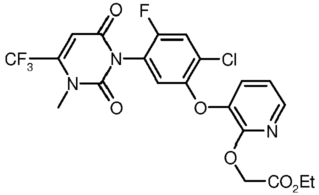

Beispiele für Pflanzenwachstumsregulatoren als mögliche Mischungspartner sind:
Acibenzolar, acibenzolar-S-methyl, 5-Aminolävulinsäure, ancymidol, 6-benzylaminopurine, Brassinolid, Catechin, chlormequat chloride, cloprop, cyclanilide, 3-(Cycloprop-1-enyl)propionsäure, daminozide, dazomet, n-decanol, dikegulac, dikegulac-sodium, endothal, endothal-dipotassium, -disodium, und mono(N,N-dimethylalkylammonium), ethephon, flumetralin, flurenol, flurenol-butyl, flurprimidol, forchlorfenuron, gibberellic acid, inabenfide, indol-3-acetic acid (IAA), 4-indol-3-ylbutyric acid, isoprothiolane, probenazole, Jasmonsäure, Jasmonsäuremethylester, maleic hydrazide, mepiquat chloride, 1-methylcyclopropene, 2-(1-naphthyl)acetamide, 1-naphthylacetic acid, 2- naphthyloxyacetic acid, nitrophenolate-mixture, 4-Oxo-4[(2-phenylethyl)amino]buttersäure, paclobutrazol, N-phenylphthalamic acid, prohexadione, prohexadione-calcium, prohydrojasmone, Salicylsäure, Strigolacton, tecnazene, thidiazuron, triacontanol, trinexapac, trinexapac-ethyl, cytodef, uniconazole, uniconazole-P.

Darüber hinaus können die erfindungsgemäßen SC's einen Safener e) enthalten. Folgende Gruppen von Verbindungen kommen beispielsweise als Safener (Komponente e) in Frage:
S1) Verbindungen aus der Gruppe heterocyclischer Carbonsäurederivate:
   S1^{a}) Verbindungen vom Typ der Dichlorphenylpyrazolin-3-carbonsäure (S1^{a}), vorzugsweise Verbindungen wie 1-(2,4-Dichlorphenyl)-5-(ethoxycarbonyl)-5-methyl-2-pyrazolin-3-carbonsäure, 1-(2,4-Dichlorphenyl)-5-(ethoxycarbonyl)-5-methyl-2-pyrazolin-3-carbonsäureethylester (S1-1) ("Mefenpyr-diethyl"), und verwandte Verbindungen, wie sie in der WO-A-91/07874 beschrieben sind;
   S1^{b}) Derivate der Dichlorphenylpyrazolcarbonsäure (S1^{b}), vorzugsweise Verbindungen wie 1-(2,4-Dichlorphenyl)-5-methylpyrazol-3-carbonsäureethylester (S1-2), 1-(2,4-Dichlorphenyl)-5-isopropylpyrazol-3-carbonsäureethylester (S1-3), 1-(2,4-Dichlorphenyl)-5-(1,1-dimethyl-ethyl)pyrazol-3-carbonsäureethylester (S1-4) und verwandte Verbindungen, wie sie in EP-A-333 131 und EP-A-269 806 beschrieben sind;
   S1^{c}) Derivate der 1,5-Diphenylpyrazol-3-carbonsäure (S1^{c}), vorzugsweise Verbindungen wie 1-(2,4-Dichlorphenyl)-5-phenylpyrazol-3-carbonsäureethylester (S1-5), 1-(2-Chlorphenyl)-5-phenylpyrazol-3-carbonsäuremethylester (S1-6) und verwandte Verbindungen wie sie beispielsweise in der EP-A-268554 beschrieben sind;
   S1^{d}) Verbindungen vom Typ der Triazolcarbonsäuren (S1^{d}), vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-7), und verwandte Verbindungen, wie sie in EP-A-174 562 und EP-A-346 620 beschrieben sind;
   S1^{e}) Verbindungen vom Typ der 5-Benzyl- oder 5-Phenyl-2-isoxazolin-3- carbonsäure, oder der 5,5-Diphenyl-2-isoxazolin-3-carbonsäure(S1^{e}), vorzugsweise Verbindungen wie 5-(2,4-Dichlorbenzyl)-2-isoxazolin-3-carbonsäureethylester (S1-8) oder 5-Phenyl-2-isoxazolin-3-carbonsäureethylester (S1-9) und verwandte Verbindungen, wie sie in WO-A-91/08202 beschrieben sind, bzw. 5,5-Diphenyl-2-isoxazolin-carbonsäure (S1-10) oder 5,5-Diphenyl-2-isoxazolin-3-carbonsäureethylester (S1-11) ("Isoxadifen-ethyl") oder -n-propylester (S1-12) oder 5-(4-Fluorphenyl)-5-phenyl-2-isoxazolin-3-carbonsäureethylester (S1-13), wie sie in der Patentanmeldung WO-A-95/07897 beschrieben sind.
S2) Verbindungen aus der Gruppe der 8-Chinolinoxyderivate (S2):
   S2^{a}) Verbindungen vom Typ der 8-Chinolinoxyessigsäure (S2^{a}), vorzugsweise (5-Chlor-8-chinolinoxy)essigsäure-(1-methylhexyl)-ester ("Cloquintocet-mexyl") (S2-1), (5-Chlor-8-chinolinoxy)essigsäure-(1,3-dimethyl-but-1-yl)-ester (S2-2), (5-Chlor-8-chinolinoxy)essigsäure-4-allyl-oxy-butylester (S2-3), (5-Chlor-8-chinolinoxy)essigsäure-1-allyloxy-prop-2-ylester (S2-4), (5-Chlor-8-chinolinoxy)essigsäureethylester (S2-5), (5-Chlor-8-chinolinoxy)essigsäuremethylester (S2-6), (5-Chlor-8-chinolinoxy)essigsäureallylester (S2-7), (5-Chlor-8-chinolinoxy)essigsäure-2-(2-propyliden-iminoxy)-1-ethylester (S2-8), (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie (5-Chlor-8-chinolinoxy)essigsäure (S2-10), deren Hydrate und Salze, beispielsweise deren Lithium-, Natrium- Kalium-, Kalzium-, Magnesium-, Aluminium-, Eisen-, Ammonium-, quartäre Ammonium-, Sulfonium-, oder Phosphoniumsalze wie sie in der WO-A-2002/34048 beschrieben sind;
   S2^{b}) Verbindungen vom Typ der (5-Chlor-8-chinolinoxy)malonsäure (S2^{b}), vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
S3) Wirkstoffe vom Typ der Dichloracetamide (S3), die häufig als Vorauflaufsafener (bodenwirksame Safener) angewendet werden, wie z. B.
   "Dichlormid" (N,N-Diallyl-2,2-dichloracetamid) (S3-1),
   "R-29148" (3-Dichloracetyl-2,2,5-trimethyl-1,3-oxazolidin) der Firma Stauffer (S3-2),
   "R-28725" (3-Dichloracetyl-2,2,-dimethyl-1,3-oxazolidin) der Firma Stauffer (S3-3),
   "Benoxacor" (4-Dichloracetyl-3,4-dihydro-3-methyl-2H-1,4-benzoxazin) (S3-4),
   "PPG-1292" (N-Allyl-N-[(1,3-dioxolan-2-yl)-methyl]-dichloracetamid) der Firma PPG Industries (S3-5),
   "DKA-24" (N-Allyl-N-[(allylaminocarbonyl)methyl]-dichloracetamid) der Firma Sagro-Chem (S3-6),
   "AD-67" oder "MON 4660" (3-Dichloracetyl-1-oxa-3-aza-spiro[4,5]decan) der Firma Nitrokemia bzw. Monsanto (S3-7),
   "TI-35" (1-Dichloracetyl-azepan) der Firma TRI-Chemical RT (S3-8),
   "Diclonon" (Dicyclonon) oder "BAS145138" oder "LAB145138" (S3-9)
   ((RS)-1-Dichloracetyl-3,3,8a-trimethylperhydropyrrolo[1,2-a]pyrimidin-6-on) der Firma BASF,
   "Furilazol" oder "MON 13900" ((RS)-3-Dichloracetyl-5-(2-furyl)-2,2-dimethyloxazolidin)
   (S3-10), sowie dessen (R)-Isomer (S3-11).
S4) Verbindungen aus der Klasse der Acylsulfonamide (S4):
   S4^{a}) N-Acylsulfonamide der Formel (S4^{a}) und deren Salze wie sie in der WO-A-97/45016 beschrieben sind, 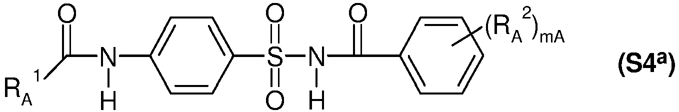 worin
      R_{A}¹ (C₁-C₆)Alkyl, (C₃-C₆)Cycloalkyl, wobei die 2 letztgenannten Reste durch v_{A} Substituenten aus der Gruppe Halogen, (C₁-C₄)Alkoxy, (C₁-C₆)Haloalkoxy und (C₁-C₄)Alkylthio und im Falle cyclischer Reste auch durch (C₁-C₄)Alkyl und (C₁-C₄)Haloalkyl substituiert sind;
      R_{A}² Halogen, (C₁-C₄)Alkyl, (C₁-C₄)Alkoxy, CF₃;
      m_{A} 1 oder 2;
      v_{A} ist 0, 1, 2 oder 3 bedeuten;
   S4^{b}) Verbindungen vom Typ der 4-(Benzoylsulfamoyl)benzamide der Formel (S4^{b}) und deren Salze, wie sie in der WO-A-99/16744 beschrieben sind, 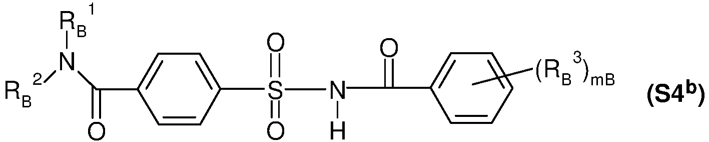 worin
      R_{B}¹, R_{B}² unabhängig voneinander Wasserstoff, (C₁-C₆)Alkyl, (C₃-C₆)Cycloalkyl, (C₃-C₆)Alkenyl, (C₃-C₆)Alkinyl,
      R_{B}³ Halogen, (C₁-C₄)Alkyl, (C₁-C₄)Haloalkyl oder (C₁-C₄)Alkoxy und
      m_{B} 1 oder 2 bedeuten,
      z.B. solche worin
      R_{B}¹ = Cyclopropyl, R_{B}² = Wasserstoff und (R_{B}³) = 2-OMe ist ("Cyprosulfamide", S4-1),
      R_{B}¹ = Cyclopropyl, R_{B}² = Wasserstoff und (R_{B}³) = 5-Cl-2-OMe ist (S4-2),
      R_{B}¹ = Ethyl, R_{B}² = Wasserstoff und (R_{B}³) = 2-OMe ist (S4-3),
      R_{B}¹ = Isopropyl, R_{B}² = Wasserstoff und (R_{B}³) = 5-Cl-2-OMe ist (S4-4) und
      R_{B}¹ = Isopropyl, R_{B}² = Wasserstoff und (R_{B}³) = 2-OMe ist (S4-5);
   S4^{c}) Verbindungen aus der Klasse der Benzoylsulfamoylphenylharnstoffe der Formel (S4^{c}), wie sie in der EP-A-365484 beschrieben sind, 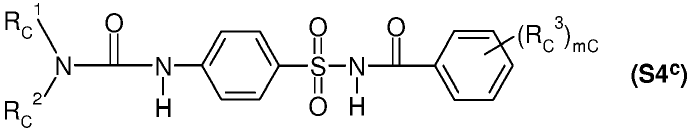 worin
      R_{C}¹, R_{C}² unabhängig voneinander Wasserstoff, (C₁-C₈)Alkyl, (C₃-C₈)Cycloalkyl, (C₃-C₆)Alkenyl, (C₃-C₆)Alkinyl,
      R_{C}³ Halogen, (C₁-C₄)Alkyl, (C₁-C₄)Alkoxy, CF₃ und
      m_{c} 1 oder 2 bedeuten;
      beispielsweise
      1-[4-(N-2-Methoxybenzoylsulfamoyl)phenyl]-3-methylharnstoff,
      1-[4-(N-2-Methoxybenzoylsulfamoyl)phenyl]-3,3-dimethylharnstoff,
      1-[4-(N-4,5-Dimethylbenzoylsulfamoyl)phenyl]-3-methylharnstoff;
   S4^{d}) Verbindungen vom Typ der N-Phenylsulfonylterephthalamide der Formel (S4^{d}) und deren Salze, die z.B. bekannt sind aus CN 101838227, 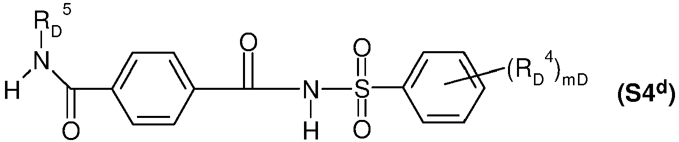 worin
      R_{D}⁴ Halogen, (C₁-C₄)Alkyl, (C₁-C₄)Alkoxy, CF₃,
      m_{D} 1 oder 2;
      R_{D}⁵ Wasserstoff, (C₁-C₆)Alkyl, (C₃-C₆)Cycloalkyl, (C₂-C₆)Alkenyl, (C₂-C₆)Alkinyl, (C₅-C₆)Cycloalkenyl bedeutet.
S5) Wirkstoffe aus der Klasse der Hydroxyaromaten und der aromatisch-aliphatischen Carbonsäurederivate (S5), z.B.
   3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 2-Hydroxyzimtsäure, 2,4-Dichlorzimtsäure, wie sie in der WO-A-2004/084631, WO-A-2005/015994, WO-A-2005/016001 beschrieben sind.
S6) Wirkstoffe aus der Klasse der 1,2-Dihydrochinoxalin-2-one (S6), z.B. 1-Methyl-3-(2-thienyl)-1,2-dihydrochinoxalin-2-on, 1-Methyl-3-(2-thienyl)-1,2-dihydro-chinoxalin-2-thion, 1-(2-Aminoethyl)-3-(2-thienyl)-1,2-dihydro-chinoxalin-2-on-hydrochlorid, 1-(2-Methylsulfonylaminoethyl)-3-(2-thienyl)-1,2-dihydro-chinoxalin-2-on, wie sie in der WO-A-2005/112630 beschrieben sind.
S7) Verbindungen aus der Klasse der Diphenylmethoxyessigsäurederivate (S7), z.B. Diphenylmethoxyessigsäuremethylester (CAS-Reg.Nr. 41858-19-9) (S7-1), Diphenylmethoxyessigsäureethylester oder Diphenylmethoxyessigsäure wie sie in der WO-A-98/38856 beschrieben sind.
S8) Verbindungen der Formel (S8), wie sie in der WO-A-98/27049 beschrieben sind,
   worin die Symbole und Indizes folgende Bedeutungen haben: 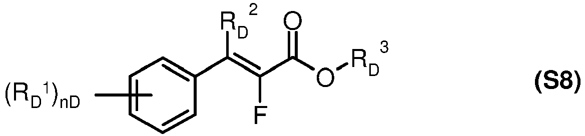
   R_{D}¹ ist Halogen, (C₁-C₄)Alkyl, (C₁-C₄)Haloalkyl, (C₁-C₄)Alkoxy, (C₁-C₄)Haloalkoxy,
   R_{D}² ist Wasserstoff oder (C₁-C₄)Alkyl,
   R_{D}³ ist Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze,
   n_{D} ist eine ganze Zahl von 0 bis 2.
S9) Wirkstoffe aus der Klasse der 3-(5-Tetrazolylcarbonyl)-2-chinolone (S9), z.B. 1,2-Dihydro-4-hydroxy-1-ethyl-3-(5-tetrazolylcarbonyl)-2-chinolon (CAS-Reg.Nr.: 219479-18-2), 1,2-Dihydro-4-hydroxy-1-methyl-3-(5-tetrazolyl-carbonyl)-2-chinolon (CAS-Reg.Nr. 95855-00-8), wie sie in der WO-A-1999/000020 beschrieben sind.
S10) Verbindungen der Formeln (S10^{a}) oder (S10^{b}),
   wie sie in der WO-A-2007/023719 und WO-A-2007/023764 beschrieben sind,
   worin 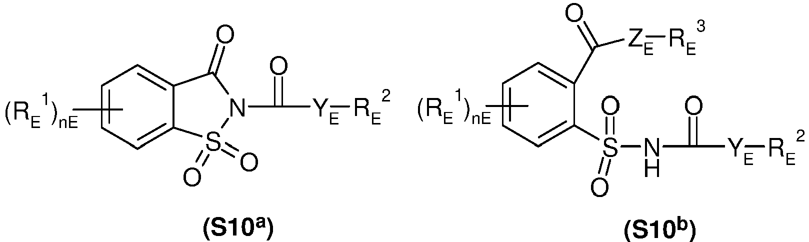
   R_{E}¹ Halogen, (C₁-C₄)Alkyl, Methoxy, Nitro, Cyano, CF₃, OCF₃
   Y_{E}, Z_{E} unabhängig voneinander O oder S,
   n_{E} eine ganze Zahl von 0 bis 4,
   R_{E}² (C₁-C₁₆)Alkyl, (C₂-C₆)Alkenyl, (C₃-C₆)Cycloalkyl, Aryl; Benzyl, Halogenbenzyl,
   R_{E}³ Wasserstoff oder (C₁-C₆)Alkyl bedeuten.
S11) Wirkstoffe vom Typ der Oxyimino-Verbindungen (S11), die als Saatbeizmittel bekannt sind, wie z. B.
   "Oxabetrinil" ((Z)-1,3-Dioxolan-2-ylmethoxyimino(phenyl)acetonitril) (S11-1), das als Saatbeiz-Safener für Hirse gegen Schäden von Metolachlor bekannt ist,
   "Fluxofenim" (1-(4-Chlorphenyl)-2,2,2-trifluor-1-ethanon-O-(1,3-dioxolan-2-ylmethyl)-oxim) (S11-2), das als Saatbeiz-Safener für Hirse gegen Schäden von Metolachlor bekannt ist, und
   "Cyometrinil" oder "CGA-43089" ((Z)-Cyanomethoxyimino(phenyl)acetonitril) (S11-3), das als Saatbeiz-Safener für Hirse gegen Schäden von Metolachlor bekannt ist.
S12) Wirkstoffe aus der Klasse der Isothiochromanone (S12), wie z.B. Methyl-[(3-oxo-1H-2-benzothiopyran-4(3H)-yliden)methoxy]acetat (CAS-Reg.Nr. 205121-04-6) (S12-1) und verwandte Verbindungen aus WO-A-1998/13361.
S13) Eine oder mehrere Verbindungen aus Gruppe (S13):
   "Naphthalic anhydrid" (1,8-Naphthalindicarbonsäureanhydrid) (S13-1), das als Saatbeiz-Safener für Mais gegen Schäden von Thiocarbamatherbiziden bekannt ist,
   "Fenclorim" (4,6-Dichlor-2-phenylpyrimidin) (S13-2), das als Safener für Pretilachlor in gesätem Reis bekannt ist,
   "Flurazole" (Benzyl-2-chlor-4-trifluormethyl-1,3-thiazol-5-carboxylat) (S13-3), das als Saatbeiz-Safener für Hirse gegen Schäden von Alachlor und Metolachlor bekannt ist,
   "CL 304415" (CAS-Reg.Nr. 31541-57-8)
      (4-Carboxy-3,4-dihydro-2H-1-benzopyran-4-essigsäure) (S13-4) der Firma American Cyanamid, das als Safener für Mais gegen Schäden von Imidazolinonen bekannt ist,
   "MG 191" (CAS-Reg.Nr. 96420-72-3) (2-Dichlormethyl-2-methyl-1,3-dioxolan) (S13-5) der Firma Nitrokemia, das als Safener für Mais bekannt ist,
   "MG 838" (CAS-Reg.Nr. 133993-74-5)
      (2-propenyl 1-oxa-4-azaspiro[4.5]decan-4-carbodithioat) (S13-6) der Firma Nitrokemia
   "Disulfoton" (O,O-Diethyl S-2-ethylthioethyl phosphordithioat) (S13-7),
   "Dietholate" (O,O-Diethyl-O-phenylphosphorothioat) (S13-8),
   "Mephenate" (4-Chlorphenyl-methylcarbamat) (S13-9).
S14) Wirkstoffe, die neben einer herbiziden Wirkung gegen Schadpflanzen auch Safenerwirkung an Kulturpflanzen wie Reis aufweisen, wie z. B.
   "Dimepiperate" oder "MY-93" (S-1-Methyl-1-phenylethyl-piperidin-1-carbothioat), das als Safener für Reis gegen Schäden des Herbizids Molinate bekannt ist,
   "Daimuron" oder "SK 23" (1-(1-Methyl-1-phenylethyl)-3-p-tolyl-harnstoff), das als Safener für Reis gegen Schäden des Herbizids Imazosulfuron bekannt ist,
   "Cumyluron" = "JC-940" (3-(2-Chlorphenylmethyl)-1-(1-methyl-1-phenyl-ethyl)harnstoff, siehe JP-A-60087254), das als Safener für Reis gegen Schäden einiger Herbizide bekannt ist,
   "Methoxyphenon" oder "NK 049" (3,3'-Dimethyl-4-methoxy-benzophenon), das als Safener für Reis gegen Schäden einiger Herbizide bekannt ist,
   "CSB" (1-Brom-4-(chlormethylsulfonyl)benzol) von Kumiai, (CAS-Reg.Nr. 54091-06-4), das als Safener gegen Schäden einiger Herbizide in Reis bekannt ist.
S15) Verbindungen der Formel (S15) oder deren Tautomere,
   wie sie in der WO-A-2008/131861 und WO-A-2008/131860 beschrieben sind, 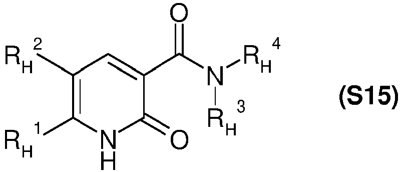 worin
   R_{H}¹ einen (C₁-C₆)Haloalkylrest bedeutet und
   R_{H}² Wasserstoff oder Halogen bedeutet und
   R_{H}³, R_{H}⁴ unabhängig voneinander Wasserstoff, (C₁-C₁₆)Alkyl, (C₂-C₁₆)Alkenyl oder (C₂-C₁₆)Alkinyl,
      wobei jeder der letztgenannten 3 Reste unsubstituiert oder durch einen oder mehrere Reste aus der Gruppe Halogen, Hydroxy, Cyano, (C₁-C₄)Alkoxy, (C₁-C₄)Haloalkoxy, (C₁-C₄)Alkylthio, (C₁-C₄) Alkylamino, Di[(C₁-C₄)alkyl]-amino, [(C₁-C₄)Alkoxy]-carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
         oder (C₃-C₆)Cycloalkyl, (C₄-C₆)Cycloalkenyl, (C₃-C₆)Cycloalkyl, das an einer Seite des Rings mit einem 4 bis 6-gliedrigen gesättigten oder ungesättigten carbocyclischen Ring kondensiert ist, oder (C₄-C₆)Cycloalkenyl, das an einer Seite des Rings mit einem 4 bis 6-gliedrigen gesättigten oder ungesättigten carbocyclischen Ring kondensiert ist,
      wobei jeder der letztgenannten 4 Reste unsubstituiert oder durch einen oder mehrere Reste aus der Gruppe Halogen, Hydroxy, Cyano, (C₁-C₄)Alkyl, (C₁-C₄)Haloalkyl, (C₁-C₄)Alkoxy, (C₁-C₄)Haloalkoxy, (C₁-C₄)Alkylthio, (C₁-C₄)Alkylamino, Di[(C₁-C₄)alkyl]-amino, [(C₁-C₄)Alkoxy]-carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
      bedeutet oder
   R_{H}³ (C₁-C₄)-Alkoxy, (C₂-C₄)Alkenyloxy, (C₂-C₆)Alkinyloxy oder (C₂-C₄)Haloalkoxy bedeutet und
   R_{H}⁴ Wasserstoff oder (C₁-C₄)-Alkyl bedeutet oder
   R_{H}³ und R_{H}⁴ zusammen mit dem direkt gebundenen N-Atom einen vier- bis achtgliedrigen heterocyclischen Ring, der neben dem N-Atom auch weitere Heteroringatome, vorzugsweise bis zu zwei weitere Heteroringatome aus der Gruppe N, O und S enthalten kann und der unsubstituiert oder durch einen oder mehrere Reste aus der Gruppe Halogen, Cyano, Nitro, (C₁-C₄)Alkyl, (C₁-C₄)Haloalkyl, (C₁-C₄)Alkoxy, (C₁-C₄)Haloalkoxy und (C₁-C₄)Alkylthio substituiert ist, bedeutet.
S16) Wirkstoffe, die vorrangig als Herbizide eingesetzt werden, jedoch auch Safenerwirkung auf Kulturpflanzen aufweisen, z. B.
   (2,4-Dichlorphenoxy)essigsäure (2,4-D),
   (4-Chlorphenoxy)essigsäure,
   (R,S)-2-(4-Chlor-o-tolyloxy)propionsäure (Mecoprop),
   4-(2,4-Dichlorphenoxy)buttersäure (2,4-DB),
   (4-Chlor-o-tolyloxy)essigsäure (MCPA),
   4-(4-Chlor-o-tolyloxy)buttersäure,
   4-(4-Chlorphenoxy)buttersäure,
   3,6-Dichlor-2-methoxybenzoesäure (Dicamba),
   1-(Ethoxycarbonyl)ethyl-3,6-dichlor-2-methoxybenzoat (Lactidichlor-ethyl).

Bevorzugte Safener im Sinne der vorliegenden Erfindung sind Safener auf Basis der Ester von Cloquintocet (bevorzugt Mexyl-ester) und/oder Mefenpyr (bevorzugt als diethyl-ester), besonders bevorzugt Mefenpyr-Diethylester.

Als Verdicker f) kommen bevorzugt organische Verdicker in Frage, wobei diese natürliche oder. biotechnologisch modifizierte oder organisch synthetische Verdicker sein können.

Typische synthetische Verdicker sind Rheostrux^{®} (Croda), Thixin^{®}- oder Thixatrol^{®}-Reihe (Elementis). Diese sind typischerweise auf Basis von Acrylaten. Typische organische Verdicker sind auf Basis von Xanthan oder Cellulose (wie etwa Hydroxyethyl oder Carboxymethylcellulose) oder einer Kombination davon. Bevorzugt werden natürliche modifzierte Verdicker auf Basis von Xanthan verwendet. Typische Vertreter sind beispielsweise Rhodopol^{®} (Solvay) und Kelzan^{®} (CPKelco Corp.) sowie Satiaxane^{®} (Cargill). Weitere Verdicker sind Trägermaterialien f) sind vorzugsweise ausgewählt aus der Gruppe enthaltend Mineralien, Carbonate, Sulfate und Phosphate von Erdalkali- und Erdmetallen, wie Calciumcarbonat, polymere Kohlenhydrate, Kieselsäuren, (natürliche) Gerüstsilikate, wie Kaolin. Typische Vertreter geeigneter Füllstoffe c) sind beispielsweise Agsorb^{®} LVM-GA (Attapulgit), Harborlite^{®} 300 (Perlit), Collys^{®} HV (modifizierte Stärke), Omya^{®}-Kreide (Calciumcarbonat), Kaolin^{®} Tec 1 (Kaolin, Aluminiumhydrosilicat), Steamic^{®} OOS (Talk, Magnesiumsilicat).

Weiter bevorzugt für f) sind hier natürliche Gerüstsilikate und Calciumcarbonat-Typen wie Omya^{®}-Kreide (Calciumcarbonat), Kaolin^{®} Tec 1 (Kaolin) und Harborlite^{®} 300 (Perlit), besonders bevorzugt natürliche Gerüstsilikate wie Kaolin^{®}, Tec 1 (Kaolin, Aluminiumhydrosilicat) und Harborlite^{®} 300 (Perlit). Weitere Füllstoffe in den erfindungsgemäßen SC Formulierungen sind ausgewählt aus der Gruppe enthaltend Mineralien, Carbonate, Sulfate und Phosphate von Erdalkali- und Erdmetallen, wie Calciumcarbonat, polymere Kohlenhydrate, Gerüstsilikate, wie Fällungskieselsäuren mit geringer Saugfähigkeit und natürliche Gerüstsilikate, wie Kaolin. Typische Vertreter geeigneter Füllstoffe c) sind beispielsweise Agsorb^{®} LVM-GA (Attapulgit), Harborlite^{®} 300 (Perlit), Collys^{®} HV (modifizierte Stärke), Omya^{®}-Kreide (Calciumcarbonat), Kaolin^{®} Tec 1 (Kaolin, Aluminiumhydrosilicat), Steamic^{®} OOS (Talk, Magnesiumsilicat). Geeignet sind beispielsweise modifizierte natürliche Silikate, wie chemisch modifizierte Bentonite, Hectorite, Attapulgite, Montmorillonite, Smektite oder andere Silikatmineralien, wie Bentone^{®} (Elementis), Attagel^{®} (Engelhard), Agsorb^{®} (Oil-Dri Corporation) oder Hectorite^{®} (Akzo Nobel) oder der Van Gel^{®}-Reihe (R.T. Vanderbilt).

Besonders bevorzugt sind Trägermaterialien f) ausgewählt aus der Gruppe der hochsaugfähigen Träger mit einer Aufnahmefähigkeit von wenigstens 200 g Dibutylphthalat pro 100 g Trägermaterial (BET Oberfläche nach ISO 9277). wie beispielsweise synthetische Fällungskieselsäure von hoher Saugfähigkeit (Sipernat^{®}-Typen) sowie pyrogene Kieselsäure (Aerosil^{®} Typen).

Weitere Zusatz- und Hilfsstoffe g) sind Netzmittel, pH-Wert-Einstellungsmittel, Entschäumer, Biozide, Desintegrationsmittel, Haftvermittler, Frostschutzmittel, Konservierungsmittel, Farbstoffe oder Dünger, sowie von Komponente b) verschiedene Tenside, bevorzugt werden Frostschutzmittel, Entschäumer und Biozide zugesetzt.

Geeignete Entschäumer sind oberflächenaktive Verbindungen auf Silikon- bzw. Silanbasis wie die Tegopren^{®}-Produkte (Goldschmidt), die SE^{®}-Produkte (Wacker), sowie die Bevaloid^{®}- (Kemira), Rhodorsil^{®}- (Solvay) und Silcolapse^{®}-Produkte (Blustar Silicones) bevorzugt sind SE^{®}- (Wacker), Rhodorsil^{®}-und Silcolapse^{®}-Produkte, besonders bevorzugt sind z.B. Produkte wie Silcolapse^{®} 5020.

Geeignete Frostschutzmittel sind solche aus der Gruppe der Harnstoffe, Diole und Polyole, wie Ethylenglycol und Propylenglycol, Glycerin bevorzugt Propylenglycol oder Glycerin.

Geeignete Biozide sind z.B. Produkte wie Acticide^{®} MBS (Biozid, Thor Chemie), CIT, MIT oder BIT wie etwa Proxel^{®} GXL (BIT), Acticide^{®} SPX (MIT, CIT).

Geeignete Haftvermittler können ausgewählt werden aus der Gruppe Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, Na-Salz des Co-Polymers aus Propensultansäure und partiell hydrolysiertem Vinylacetat, Natriumcaseinat, Phenolharze, modifizierte CelluloseTypen wie beispielsweise Luviskol^{®} (Polyvinylpyrrolidon), Mowiol^{®} (Polyvinylalkohol), modifizierte Cellulose

Bevorzugt sind Polyvinylpyrrolidon-Typen, besonders bevorzugt sind Typen von niedrigem Molekulargewicht wie Luviskol^{®} K30.

Geeignete Desintegrationsmittel können ausgewählt werden aus der Gruppe der modifizierten Kohlenhydrate, wie mikrokristalline Cellulose und quervernetzten Polyvinylpyrrolidone, wie beispielsweise Avicel^{®} PH 101 (mikrokristalline Cellulose), Agrimer^{®} XLF (quervemetztes Polyvinylpyrrolidon), Disintex^{®} 200 (quervemetztes Polyvinylpyrrolidon). Bevorzugt sind quervernetzte Polyvinylpyrrolidone, wie Agrimer^{®} XLF.

Geeignete Antischaum-Mittel können ausgewählt werden aus der Gruppe der Ester der Phosphorsäure mit niederen Alkoholen, C6-C10 Alkohole, Silicontenside (Suspoemulsionen von hydrophobisierten Kieselsäurepartikeln in wässrigen Emulsionskonzentraten auf der Basis flüssiger Silicontenside), wie Polydimethylsiloxan, sowie deren Absorbate an festes Trägermaterial wie beispielsweise Rhodorsil^{®} 432 (Silicontensid), Butylphosphat, iso-Butylphosphat, n-Octanol, Wacker ASP15 (Polydimethylsiloxan, an festem Träger absorbiert), Antischaum-MittelSE (Polydimethylsiloxan). Bevorzugt sind Suspoemulsionen von hydrophobisierten Kieselsäurepartikeln in wässrigen Emulsionskonzentraten auf der Basis flüssiger Silicontenside, wie Antischaum-Mittel SE (Polydimethylsiloxan), und feste Antischaum-Mittel, wie Wacker ASP 15 (Polydimethylsiloxan).

Die Erfindung betrifft weiterhin ein herbizides Mittel, welches aus den erfindungsgemäßen SC's durch Verdünnen mit Flüssigkeiten, bevorzugt Wasser, hergestellt werden kann.

Es kann vorteilhaft sein, den so erhaltenen herbiziden Mitteln weitere Wirkstoffe, bevorzugt agrochemische Wirkstoffe (z.B. als Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche Mittel, bevorzugt Herbizide, auf Basis der erfindungsgemäßen Formulierungen.

Eine besondere Ausführungsform der Erfindung betrifft die Verwendung der aus den erfindungsgemäßen SC's erhältlichen herbiziden Mittel zur Bekämpfung von unerwünschtem Pflanzenwuchs, im Folgenden als "herbizides Mittel" bezeichnet.

Die herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die herbiziden Mittel z.B. im Vorsaat-, Vorauflauf- oder Nachauftaufverfahren ausgebracht werden. Im Einzelnen seien beispielhaft einige Vertreter der mono- und dikotylen Unkrautflora genannt, die durch die herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp.,Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt. Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, lpomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Die erfindungsgemäßen Formulierungen werden vorzugsweise in Reis, Mais, Weizen, Gerste, Hafer, Roggen, Hirse und Raps eingesetzt.

Unter den spezifischen Kulturbedingungen im Reis vorkommende Schadpflanzen wie z.B. Echinochloa, Sagittaria, Alisma, Eleocharis, Scirpus und Cyperus werden von den herbiziden Mitteln ebenfalls hervorragend bekämpft. Werden die herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen herbiziden Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die entsprechenden herbiziden Mittel je nach Kulturpflanze hervorragende Wachstumsregulatorische Eigenschaften auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich potentiell auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen-Eigenschaften können die herbiziden Mittel -wie bereits erwähnt- auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Bevorzugt können die herbiziden Mittel in Nutzpflanzenkulturen eingesetzt werden, welche gegenüber den phytotoxischen Wirkungen der Herbizide resistent sind bzw. gentechnisch resistent gemacht worden sind.

Bei der Anwendung der herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, bevorzugt gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Gegenstand der vorliegenden Erfindung ist somit auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen herbiziden Mittel auf die Schadpflanzen, Pflanzenteile, Pflanzensamen oder die Fläche auf der die Pflanzen wachsen, z.B. die Anbaufläche. appliziert. Die Pflanzenkulturen können auch gentechnisch verändert oder durch Mutationsselektion erhalten sein und sind bevorzugt tolerant gegenüber Acetolactatsynthase (ALS)-Inhibitoren.

Mit den erfindungsgemäßen Formulierungen kann bei gleicher Aufwandmenge eine bessere biologische Wirkung erzielt werden. Vorteilhafterweise und überraschenderweise zeigen die erfindungsgemäßen Formulierungen eine ausgezeichnete Pflanzenverträglichkeit wie eine reduzierte Neigung phytotoxische Schäden zu verursachen.

Daneben haben die erfindungsgemäßen Formulierungen als spezielle Wirkstoff-Kombinations-Formulierungen (synonym: Mischungs-Formulierungen, Co-Formulierungen) weitere Vorteile, wie z.B. ein geringerer Verpackungsaufwand als bei Verwendung der Einzelwirkstoffe, wodurch sich der Aufwand für Herstellung, Transport und Lagerung vereinfacht und die Zubereitung der in der Landwirtschaft eingesetzten Spritzbrühen durch die kleineren Mengen und die bereits eingestellten, wirksamen Mengenverhältnisse besser gehandhabt werden können, wie z.B. beim Mess- und Verrühr-Vorgang.

Die erfindungsgemäßen Formulierungen zeigen zusätzlich überraschenderweise hervorragende dispergierende und stabilisierende Eigenschaften nach dem weiteren Verdünnen mit Flüssigkeiten, bevorzugt Wasser.

Daneben ergeben die Formulierungen Langzeit-lagerstabile und anwendungstechnisch einwandfreie Formulierungen.

Ferner weisen die erfindungsgemäßen Formulierungen besonders gute herbicide Eigenschaften bei trockenen Böden auf, insbesondere wenn DCPMI und Flufenacet eingesetzt werden.

Die Partikelgröße wird nach CIPAC (CIPAC = Collaborative International Pesticides Analytical Council; www.cipac.org) Methode MT 187 bestimmt als d50 bzw. D90 (Wirkstoff-Partikelgröße Laserstreuung 50 bzw. 90% aller Volumenpartikel). Die mittlere Partikelgröße bezeichnet den d50 Wert.

Die Erfindung wird durch die nachfolgenden Beispiele näher erläutert.

### Beispiele

### Verwendete Substanzen und Abkürzungen:

Die in den nachfolgenden Beispielen verwendeten Begriffe haben folgende Bedeutung:
- Flufenacet: 4'-Fluoro-N-isopropyl-2-(5-trifluoromethyl-1,3,4-thiadiazol-2-yloxy)acetanilide (Bayer AG), im Folgenden abgekürzt FFA, log P = 3,2
- DCPMI: 2-[(2,4-Dichlorphenyl)-methyl]-4,4'-dimethyl-3-isoxazolidinone (CAS Nummer 81777-95-9 bzw. IUPAC 2-(2,4-dichlorobenzyl)-4,4-dimethyl-1,2-oxazolidin-3-one, im Folgenden abgekürzt DCPMI), log P = 3,39
- Morwet^{®} D-425: Naphthalinsulfonsäure-formaldehyd-kondensat Natriumsalz (Nouryon)
- Pluronic^{®} PE 10500: Propylenoxid-Ethylenoxid-(PO-EO)-Blockpolymer (BASF)
- Citronensäure: mehrbasige organische Säure
- Rhodopol^{®} G: Xanthan Derivat (Solvay)
- Aerosil^{®} 200: Synthetische amorphe Silica (silicon dioxide, Evonik)
- Silcolapse^{®} 426R, 411: Silikon-Entschäumer (Elkam)
- Glycerin: Frostschutzmittel
- Proxel^{®} GXL: Konservierungsmittel (Biozid, Proxel)
- Adjuvant 1: C8-C10 Alkylpolyglycosid, D-glucopyranose-oligomere - decyl octyl glycosides, 60% Glycosid and 40% Wasser, CAS Nummer 68515-73-1, BASF, Agnique^{®} PG 8105, log P 1.77
- Adjuvant 2: Polyoxyethylen-sorbitan-Fettsäureester (20 EO), Sorbitan monooleate, ethoxyliert, aufgebaut aus Ölsäure, mit Sorbitol und seinen Anhydriden, CAS Nummer 9005-65-6, Croda, Tween^{®} 80, log P ca. 2;
- Adjuvant 3: Polyoxyethylen-sorbitan-Fettsäureester (20 EO), Sorbitan monolaurate, ethoxyliert, aufgebaut aus Laurinsäure, mit Sorbitol und seinen Anhydriden, CAS Nummer 9005-64-5, Croda, Tween^{®} 20, log P ca. -0,55;

Der Log P beschreibt die Verteilung v.a. von pestiziden Wirkstoffen zwischen Wasser und n-Octanol.

Banerjee et al., 1980, S. Banerjee, S.H. Yalkowsky, S.C. Valvani, Water solubility and octanol/water partition coefficients of organics. Limitations of the solubility-partition coefficient correlation, Environ. Sci. Technol., 14 (1980), pp. 1227-1229.

### Herstellungsbeispiel

### SC-Formulierungen:

Zur Herstellung der erfindungsgemäßen ZC Formulierungen wurden die folgenden SC Formulierungen als Mischpartner hergestellt. Diese werden mit den erfindungsgemäßen Formulierungen zu weiteren erfindungsgemäßen Formulierungen abgemischt.

### Herstellung eines wässrigen Suspensionskonzentrats:

Zur Herstellung der in Tabelle 1 genannten Beispiele wird zunächst Wasser bei Raumtemperatur vorgelegt. Unter Rühren werden anschließend die weiteren Komponenten hinzugegeben (ohne besondere Reihenfolge). Anschließend erfolgt eine Nassvermahlung beispielsweise mittels einer Perlmühle. Abschließend wird der organische Verdicker zugegeben.

**Tabelle 1: Hergestellte Formulierungen (Angaben erfolgen in Gewichtsprozent, Gew.-%)**

| | | **SC-1** | **SC-2** |
|---|---|---|---|
| **A** | DCPMI | 42,37 | |
| **A** | Flufenacet | | 42,37 |
| **B** | Morwet^{®} D-425 | 1,0 | 1,0 |
| **B** | Pluronic^{®} PE 10500 | 5 | 5 |
| **G** | Citronensäure | 0,1 | 0,1 |
| **F** | Aerosil^{®} 200 | 0,5 | 0,5 |
| **F** | Rhodopol^{®} 23 | 0,2 | 0,2 |
| **G** | Silcolapse^{®} 411 | 0,5 | 0,5 |
| **G** | Glycerin | 5 | 5 |
| **G** | Proxel^{®} GXL | 0,18 | 0,18 |

| **Wasser wird auf 100% gesamt zugegeben** | | | |
|---|---|---|---|
| Dichte der Formulierung | 1,19 | 1,19 | |
| g/L Gehalt an Wirkstoff | 500 | 500 | |

### Hergestellte Fertigformulierungen

Die Fertigformulierungen wurden durch Mischung SC-1 sowie SC-2 durch Zugabe der entsprechenden Adjuvant Mengen hergestellt. Es wurden jeweils Gew.-% verwendet. Als Vergleich wurden die jeweiligen Formulierungen als 100% genommen. Die fertigen Formulierungen wurden im Gewächshaus getestet.

### Gewächshausversuche:

In der Standardversuchsdurchführung wurden die Samen unterschiedlicher Unkraut und Ungras Biotypen (Herkünfte) in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden auf einer Laborspritzbahn mit Spritzbrühen mit den erfindungsgemäßen Mischungen/Zusammensetzungen, Mischungen des Standes der Technik beziehungsweise mit den einzeln angewandten Komponenten behandelt. Die Applikation der als WG, WP, EC oder anders formulierten Wirkstoffe oder Wirkstoffkombinationen erfolgte zu den entsprechenden Wachstumsstadien der Pflanzen. Die Wasseraufwandmenge für die Spritzapplikation betrug 100-600 l/ha. Nach der Behandlung wurden die Pflanzen wieder in den Gewächshäusern aufgestellt.

Etwa 3 Wochen nach der Applikation wurde die Boden- oder/und Blattwirkung gemäß einer Skala von 0-100% optisch im Vergleich zu einer unbehandelten Vergleichsgruppe bewertet: 0% = keine erkennbare Wirkung im Vergleich zur unbehandelten Vergleichsgruppe; 100% = vollständige Wirkung im Vergleich zur unbehandelten Vergleichsgruppe.

(Anmerkungen: Der Begriff "Samen" umfasst auch vegetative Vermehrungsformen, wie z.B. Rhizomstücke; verwendete Abkürzungen: h Licht = Stunden Beleuchtungsdauer, g AS/ha = Gramm Aktivsubstanz je Hektar, l/ha = Liter je Hektar, S = sensitiv, R = resistent)
1. Unkrautwirkung im Vorauflauf: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.
2. Unkrautwirkung im Nachauflauf: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16h Licht, Temperatur Tag 20-22°C, Nacht 15-18°C) bis zum Applikationszeitpunkt kultiviert. Die Töpfe wurden zu unterschiedlichen BBCH Stadien zwischen 11-25 der Samen/Pflanzen, d.h. in der Regel zwischen zwei bis drei Wochen nach Beginn der Anzucht, auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.
3. Unkrautwirkung im Vorauflauf mit und ohne Wirkstoffeinarbeitung: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät. Die Töpfe mit den Samen wurden im Vergleich entweder im BBCH Stadium 00-10 der Samen/Pflanzen, d.h. in der Regel zwischen zwei bis drei Wochen nach Beginn der Anzucht, auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt, oder eine äquivalente Menge der erfindungsgemäßen Mischungen/Zusammensetzungen, Mischungen beziehungsweise der einzeln angewandten Komponenten als WG, WP, EC oder anderen Formulierungen wurden in die Deckschicht von 1cm eingearbeitet. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.
4. Selektivitätswirkung im Vorauflauf: Samen unterschiedlicher Kulturarten (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.
5. Selektivitätswirkung im Nachauflauf: Samen unterschiedlicher Kulturarten (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 11-32 der Samen/Pflanzen, d.h. in der Regel zwischen zwei bis vier Wochen nach Beginn der Anzucht, auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert
6. Unkrautwirkung in der Vorsaatanwendung: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät. Die Töpfe mit den Samen wurden vor der Aussaat auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Aussaat wurden die Töpfe in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.
7. Unkrautwirkung im Vor- und Nachauflauf bei unterschiedlichen Kultivierungsbedingungen: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert. Die Bewässerung wurde entsprechend der Fragestellung variiert. Dabei wurden die einzelnen Vergleichsgruppen in Abstufungen in einem Bereich von oberhalb des PWP (permanenter Welkepunkt) und bis zum Niveau der maximalen Feldkapazität mit Wasser versorgt.
8. Unkrautwirkung im Vor- und Nachauflauf bei unterschiedlichen Bewässerungsbedingungen: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert. Die einzelnen Vergleichsgruppen wurden dabei unterschiedlichen Bewässerungstechniken ausgesetzt. Die Bewässerung erfolgte entweder von unten oder in Abstufungen von oben (simulierte Beregnung).
9. Unkrautwirkung im Vor- und Nachauflauf bei unterschiedlichen Bodenbedingungen: Samen unterschiedlicher Unkraut und Ungras Biotypen (Herkünfte) wurden in einem mit natürlicher Erde gefüllten Topf von 8-13 cm Durchmesser ausgesät und mit einer Abdeckschicht des Bodens von etwa 1cm abgedeckt. Für einen Vergleich der herbiziden Wirkung wurden die Pflanzen in unterschiedlichen Anzuchterden, von einem sandigen Boden bis schweren Tonboden und verschiedenen organischen Substanzgehalten, kultiviert. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.
10.Unkrautwirkung im Vor- und Nachauflauf zur Bekämpfung resistenter Ungras- / Unkrautarten: Samen unterschiedlicher Unkraut und Ungras Biotypen (Herkünfte) mit unterschiedlichen Resistenzmechanismen gegenüber verschiedenen Wirkmechanismen wurden in einem mit natürlicher Erde eines Standardfeldbodens (lehmiger Schluff, LSI; pH 7.4; % C org 2,2) gefüllten Topf von 8 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag ca. 23°C, Nacht ca. 15°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 300 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag ca. 23°C, Nacht ca. 15°C) kultiviert.
11.Unkrautwirkung und Kulturselektivität im Vor- und Nachauflauf bei unterschiedlichen Aussaatbedingungen: Samen unterschiedlicher Unkraut, Ungras Biotypen (Herkünfte) und Kulturarten (Herkünfte) wurden in einem mit natürlicher Erde gefüllten Topf von 8-13 cm Durchmesser ausgesät und mit einer Abdeckschicht des Bodens von etwa 0-5cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.
12.Unkrautwirkung im Vor- und Nachauflauf bei unterschiedlichen pH-Werten des Bodens: Samen unterschiedlicher Unkraut und Ungras Biotypen (Herkünfte) wurden in einem mit natürlicher Erde gefüllten Topf von 8-13 cm Durchmesser ausgesät und mit einer Abdeckschicht des Bodens von etwa 1cm abgedeckt. Für einen Vergleich der herbiziden Wirkung wurden die Pflanzen in Anzuchterden, von einem Standardfeldboden (lehmiger Schluff; nicht steril) mit unterschiedlichen pH-Werten von pH 7,4 und pH 8,4 kultiviert. Der Boden wurde entsprechend mit Kalk auf den höheren pH-Wert aufgemischt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

Die Untersuchungen wurden bei verschiedenen Trockengehalten des Bodens durchgeführt.

Feuchte Bedingungen: Die Testtöpfe wurden täglich mit 1 1 Wasser je m² bewässert.

Trockene Bedingungen: Die Testtöpfe wurden täglich mit 0,25 1 Wasser je m² bewässert.

Normale Bedingungen: Die Testtöpfe wurden täglich mit 0,5 1 Wasser je m² bewässert.

### Ergebnisse aus dem Gewächshaus:

Es wurden jeweils die Formulierungen mit den Vergleichsbeispielen 1-3 auf ihre Wirkung gegen typischen Unkräuter und Ungräser getestet. Das Applikationsfenster war früher Vorauflauf (BBCH 11). Die Gewächshausmenge liegt bei 100 g/ha DCPMI was mit einer typischen Feldaufwandmenge von 200 g/ha DCPMI korreliert (Transferfaktor vom Gewächshaus ins Feld liegt somit bei 2). Die Töpfe wurden jeweils unter feuchten, normalen und trockenen Bedingungen getestet. Für Flufenacet wurde mit 125 g/ha getestet. Es wurde jeweils die Formulierung mit dem Adjuvant gemischt und dann appliziert. Typischerweise wurden 100L/ha Wasser als Verdünnung gewählt.

### Verwendete Aufwandmenge in g/ha

| Beispiel | Verwendete Formulierung | FFA g/ha | DCPMI g/ha | Adjuvant 1 g/ha | Adjuvant 2 g/ha |
|---|---|---|---|---|---|
| Vergleich 1 | SC-1 | | 100 | | |
| Vergleich 2 | SC-2 | 125 | | | |
| Beispiel 1 | SC-1 mit Adjuvant 1 | | 100 | 1000 | |
| Beispiel 2 | SC-1 mit Adjuvant 1 | | 100 | 500 | |
| Beispiel 3 | SC-1 mit Adjuvant 1 | | 100 | 250 | |
| Beispiel 4 | SC-1 mit Adjuvant 2 | | 100 | | 1000 |
| Beispiel 5 | SC-1 mit Adjuvant 2 | | 100 | | 500 |
| Beispiel 6 | SC-1 mit Adjuvant 2 | | 100 | | 250 |
| Beispiel 7 | SC-2 mit Adjuvant 1 | 125 | | 1000 | |
| Beispiel 8 | SC-2 mit Adjuvant 1 | 125 | | 500 | |
| Beispiel 9 | SC-2 mit Adjuvant 1 | 125 | | 250 | |
| Beispiel 10 | SC-2 mit Adjuvant 2 | 125 | | | 1000 |
| Beispiel 11 | SC-2 mit Adjuvant 2 | 125 | | | 500 |
| Beispiel 12 | SC-2 mit Adjuvant 2 | 125 | | | 250 |

Wirkung gegen Ungräser unter feuchten, trockenen und normalen Bedingungen. Es wurden jeweils die folgenden wichtigen Ungräser im Wintergetreide untersucht:
AVEFA *= Avena fatua* = Flughafer
ALOMY *= Alopecurus myosuroides* = Ackerfuchsschwanzgras
APESY = *Apera spica-venti* = Gemeiner Windhalm

### LOLMU = Lolium multiflorum = Welsches Weidelgras

| Verwendete Formulierun g | % Kontrolle gegen AVEFA/ALOMY/APESY / LOLMU | % Kontrolle gegen AVEFA/ALOMY/APESY / LOLMU | % Kontrolle gegen AVEFA/ALOMY/APESY / LOLMU |
|---|---|---|---|
| | trocken | normal | feucht |
| Vergleich 1 | 40/95/10/95 | 30/95/10/80 | 30/90/10/80 |
| Vergleich 2 | 30/90/100/30 | 80/100/100/85 | 95/98/100/95 |
| Beispiel 1 | 40/100/10/95 | 30/95/20/90 | 40/100/10/95 |
| Beispiel 2 | 40/100/10/95 | 30/95/20/80 | 40/90/10/80 |
| Beispiel 3 | 70/95/10/95 | 50/100/10/90 | 30/100/10/90 |
| Beispiel 4 | 80/95/10/95 | 30/90/20/90 | 40/99/10/90 |
| Beispiel 5 | 70/99/10/95 | 50/95/10/95 | 40/90/10/90 |
| Beispiel 6 | 60/99/10/99 | 30/90/10/70 | 35/100/10/90 |
| Beispiel 7 | 40/95/100/90 | 80/98/100/98 | 95/100/100/98 |
| Beispiel 8 | 40/95/100/70 | 90/98/100/97 | 95/100/100/97 |
| Beispiel 9 | 40/95/100/60 | 80/98/100/95 | 95/98/100/97 |
| Beispiel 10 | 40/95/100/30 | 50/100/100/70 | 90/100/100/98 |
| Beispiel 11 | 40/95/100/30 | 45/100/100/70 | 90/100/100/100 |
| Beispiel 12 | 40/98/100/30 | 40/100/100/70 | 85/100/100/95 |

Die beiden gewählten Wirkstoffe zeigen besonders bei AVEFA und LOLMU mit den Adjuvants signifikante Verbesserungen auf. Zur besseren Vergleichbarkeit wurde die absolute Verbesserung in Prozentpunkten in der folgenden Tabelle dargestellt. Die Zahlen sind aus der oberen Tabelle übertragen und zeigen unter den jeweiligen Bedingungen die prozentuale Reduzierung/Bekämpfung der Ungräser AVEFA und LOLMU

| | AVEFA | LOLMU | AVEFA | LOLMU | AVEFA | LOLMU |
|---|---|---|---|---|---|---|
| | trocken | trocken | normal | normal | Feucht | feucht |
| Vergleich 2 | 30 | 30 | 80 | 85 | 95 | 95 |
| Beispiel 9 | 40 | 60 | 80 | 95 | 95 | 97 |
| Verbesserung | 10 | 30 | 0 | 10 | 0 | 2 |
| Beispiel 8 | 40 | 70 | 90 | 97 | 95 | 97 |
| Verbesserung | 10 | 40 | 10 | 12 | 0 | 2 |
| Beispiel 7 | 40 | 90 | 80 | 98 | 95 | 98 |
| Verbesserung | 10 | 60 | 0 | 13 | 0 | 3 |
| Beispiel 12 | 40 | 30 | 40 | 70 | 85 | 95 |
| Verbesserung | 10 | 0 | -40 | -15 | -10 | 0 |
| Beispiel 11 | 40 | 30 | 45 | 70 | 90 | 100 |
| Verbesserung | 10 | 0 | -35 | -15 | -5 | 5 |
| Beispiel 10 | 40 | 30 | 50 | 70 | 90 | 98 |
| Verbesserung | 10 | 0 | -30 | -15 | -5 | 3 |
| | | | | | | |

| | AVEFA | LOLMU | AVEFA | LOLMU | AVEFA | LOLMU |
|---|---|---|---|---|---|---|
| | trocken | trocken | normal | normal | feucht | feucht |
| Vergleich 1 | 40 | 95 | 30 | 80 | 30 | 80 |
| Beispiel 3 | 70 | 95 | 50 | 90 | 30 | 90 |
| Verbesserung | 30 | 0 | 20 | 10 | 0 | 10 |
| Beispiel 2 | 40 | 95 | 30 | 80 | 40 | 80 |
| Verbesserung | 0 | 0 | 0 | 0 | 10 | 0 |
| Beispiel 1 | 40 | 95 | 30 | 90 | 40 | 95 |
| Verbesserung | 0 | 0 | 0 | 10 | 10 | 15 |
| Beispiel 6 | 60 | 99 | 30 | 70 | 35 | 90 |
| Verbesserung | 20 | 4 | 0 | -10 | 5 | 10 |
| Beispiel 5 | 70 | 95 | 50 | 95 | 40 | 90 |
| Verbesserung | 30 | 0 | 20 | 15 | 10 | 10 |
| Beispiel 4 | 80 | 95 | 30 | 90 | 40 | 90 |
| Verbesserung | 40 | 0 | 0 | 10 | 10 | 10 |

Die erfindungsgemäßen Formulierungen mit den herbiziden Wirkstoffen zeigen eine deutlich höhere Wirkung mit den beiden Adjuvants 1 und 2. Besonders unter trockenen Bedingungen zeigen die Adjuvants eine deutliche Wirkungsverbesserung. Bei Flufenacet zeigte sich, dass besonders Adjuvant 1 zwischen 250 und 1000 g/ha eine konsistente deutliche Verbesserung der Wirkung zeigte. Adjuvant 2 zeigte unter trockenen Bedingungen eine bessere, unter feuchten Bedingungen eine schlechtere Wirkung.

DCPMI zeigte mit beiden Adjuvants schon ab 250 g/ha eine deutliche Verbesserung.

Die Abmischungen von SC-1 und -2 mit Adjuvant 3 zeigten hingegen keine Verbesserung der Wirkung.

## Patentansprüche

1. Formulierung enthaltend
a) DCPMI und/oder Flufenacet,
b) mindestens ein Dispergiermittel,
c) einen Wirkverbesserer,
**dadurch gekennzeichnet, daß** c) ein Alkylpolysaccharid ist, und daß der Anteil anWirkverbesserer c) in der Formulierung 5,0 bis 95,0 Gew.-%, beträgt,
d) optional mindestens einen von a) verschiedenen agrochemischen Wirkstoff,
e) optional mindestens einen Safener,
f) optional mindestens einen Verdicker,
g) optional weitere Zusatz- und Hilfsstoffe, und
h) Wasser.

2. Formulierung nach Anspruch 1, **dadurch gekennzeichnet, daß** der Anteil an Wirkstoff a) in den erfindungsgemäßen Formulierungen 0,5 bis 55,0 Gew.-%, weiter bevorzugt 0,5 bis 45,0 Gew.-%, noch weiter bevorzugt 5,0 bis 40,0 Gew.-%, und besonders bevorzugt 10,0 bis 40,0 Gew.-% beträgt.

3. Formulierung nach Anspruch 1 oder 2, **dadurch gekennzeichnet, daß** der Anteil Dispergiermittel b) 1,0 bis 15,0 Gew.-%, weiter bevorzugt 2,0 bis 10,0 Gew.-% und ganz besonders bevorzugt 2,5 bis 8,0 Gew.-%, beträgt.

4. Formulierung nach einem oder mehreren der vorhergehenden Ansprüche, **dadurch gekennzeichnet, daß** der Anteil an Wirkverbesserer c) in der Formulierung 10,0 bis 90,0 Gew.-% und ganz besonders bevorzugt 20,0 bis 80,0 Gew.-% beträgt.

5. Formulierung nach einem oder mehreren der vorhergehenden Ansprüche, **dadurch gekennzeichnet, daß** als Dispergiermittel eine Kombination aus mindestens einem ionischen und einem nicht-ionischen Dispergiermittel verwendet wird, vozugsweise eine Kombination von Sulfonaten, und einem nichtionischen Dispergiermittel aus der Gruppe der Tristyryl-phenol-ethoxylate, Tristyryl-phenol-ethoxy-propoxylate und Ricinusölpolyglykoletherestern.

6. Formulierung nach einem der vorhergehenden Ansprüche, **dadurch gekennzeichnet, daß** das Alkylpolysaccharid eine allgemeine Struktur der Formel (I) aufweist:
R⁵-O-(*su_{g}*)ᵤ (I),
wobei R5 ein unverzweigter oder verzweigter, optional substituierter oder unsubstituierter, Hydrocarbylrest ist, ausgewählt aus der Gruppe bestehend aus Alkyl, Alkenyl, Alkylphenyl und Alkenylphenyl, vorzugsweise mit 4 bis 22 Kohlenstoffatomen, und
die su_{g}-Einheit ein Saccharid-Rest mit offener oder cyclischer Struktur ist wobie der Saccharidrest ausgewählt ist aus der Gruppe umfassend Monosaccharide, Disaccharide und Polysaccharide.

7. Verwendung der Formulierungen nach Anspruch 1 als Herbizid bei trockenen Böden.

8. Verwendung der Formulierungen nach Anspruch 1 als Herbizid in Reis, Mais, Weizen, Gerste, Hafer, Roggen, Hirse und Raps im Vorauflauf.

9. Verwendung nach Anspruch 8 bei trockenen Böden.

10. Verwendung nach einem der Ansprüche 7 - 9 gegen *Avena fatua* (Flughafer), *Alopecurus myosuroides* (Ackerfuchsschwanzgras), *Apera spica-venti* (Gemeiner Windhalm) und *Lolium multiflorum* (Welsches Weidelgras).

## Claims

1. Formulation comprising
a) DCPMI and/or Flufenacet,
b) at least one dispersant,
c) a synergist,
**characterized in that** c) is an alkylpolysaccharide, and that the proportion of synergist c) in the formulation is 5.0 to 95.0% by weight,
d) optionally at least one agrochemical active ingredient different from a),
e) optionally at least one safener,
f) optionally at least one thickener,
g) optionally further additional and auxiliary substances, and
h) water.

2. Formulation according to claim 1, **characterized in that** the proportion of active ingredient a) in the formulations according to the invention is 0.5 to 55.0% by weight, more preferred 0.5 to 45.0% by weight, even more preferred 5.0 to 40.0% by weight, and particularly preferred 10.0 to 40.0% by weight.

3. Formulation according to claim 1 or 2, **characterized in that** the proportion of dispersant b) is 1.0 to 15.0% by weight, more preferred 2.0 to 10.0% by weight and most preferred 2.5 to 8.0% by weight.

4. Formulation according to one or more of the preceding claims, **characterized in that** the proportion of synergist c) in the formulation is 10.0 to 90.0% by weight and most preferred 20.0 to 80.0% by weight.

5. Formulation according to one or more of the preceding claims, **characterized in that** a combination of at least one ionic and one non-ionic dispersant is used as the dispersant, preferably a combination of sulfonates, and a non-ionic dispersant from the group of tristyrylphenol ethoxylates, tristyrylphenol ethoxy-propoxylates and castor oil polyglycol ether esters.

6. Formulation according to one of the preceding claims, **characterized in that** the alkylpolysaccharide has a general structure of formula (I):
R⁵-O-(*su_{g}*)ᵤ (I),
wherein R5 is an unbranched or branched, optionally substituted or unsubstituted, hydrocarbyl moiety selected from the group consisting of alkyl, alkenyl, alkylphenyl and alkenylphenyl, preferably with 4 to 22 carbon atoms, and
the su_{g} unit is a saccharide moiety with an open or cyclic structure wherein the saccharide moiety is selected from the group comprising monosaccharides, disaccharides and polysaccharides.

7. Use of the formulation according to claim 1 as a herbicide on dry soils.

8. Use of the formulation according to claim 1 as a herbicide in rice, corn, wheat, barley, oats, rye, millet, and canola in pre-emergence.

9. Use according to claim 8 on dry soils.

10. Use according to one of claims 7 - 9 against *Avena fatua* (wild oat), *Alopecurus myosuroides* (blackgrass), *Apera spica-venti* (loose silky-bent) and *Lolium multiflorum* (Italian ryegrass).

## Revendications

1. Formulation contenant
a) DCPMI et/ou Flufenacet,
b) au moins un dispersant,
c) un améliorateur d'efficacité,
**caractérisé en ce que** c) est un alkylpolysaccharide, et que la proportion d'améliorateur d'efficacité c) dans la formulation est de 5,0 à 95,0 % en poids,
d) optionnellement au moins un agent agrochimique différent de a),
e) optionnellement au moins un antidote,
f) optionnellement au moins un épaississant,
g) optionnellement d'autres additifs et auxiliaires, et
h) de l'eau.

2. Formulation selon la revendication 1, **caractérisée en ce que** la proportion de substance active a) dans les formulations de l'invention est de 0,5 à 55,0 % en poids, de préférence de 0,5 à 45,0 % en poids, encore plus préférée de 5,0 à 40,0 % en poids, et particulièrement préférée de 10,0 à 40,0 % en poids.

3. Formulation selon la revendication 1 ou 2, **caractérisée en ce que** la proportion de dispersant b) est de 1,0 à 15,0 % en poids, de préférence de 2,0 à 10,0 % en poids et tout particulièrement préférée de 2,5 à 8,0 % en poids.

4. Formulation selon une ou plusieurs des revendications précédentes, **caractérisée en ce que** la proportion d'améliorateur d'efficacité c) dans la formulation est de 10,0 à 90,0 % en poids et tout particulièrement préférée de 20,0 à 80,0 % en poids.

5. Formulation selon une ou plusieurs des revendications précédentes, **caractérisée en ce que** comme dispersant une combinaison d'au moins un dispersant ionique et un dispersant non ionique est utilisée, de préférence une combinaison de sulfonates, et un dispersant non ionique de la famille des tristyryl-phénol-éthoxylates, tristyryl-phénol-éthoxy-propoxylates et esters d'huile de ricin polyéthylèneglycol.

6. Formulation selon une des revendications précédentes, **caractérisée en ce que** l'alkylpolysaccharide présente une structure générale de la formule (I) :
R⁵-O-(*su_{g}*)ᵤ (I),
dans R5 est un résidu hydrocarbure non ramifié ou ramifié, optionnellement substitué ou non substitué, choisi dans le groupe constitué d'alkyle, alcényle, alkylphényle et alcénylphényle, de préférence avec 4 à 22 atomes de carbone, et
l'unité su_{g} est un résidu saccharide à structure ouverte ou cyclique dans lequel le résidu saccharide est choisi dans le groupe comprenant les monosaccharides, disaccharides et polysaccharides.

7. Utilisation des formulations selon la revendication 1 comme herbicide sur des sols secs.

8. Utilisation des formulations selon la revendication 1 comme herbicide dans le riz, le maïs, le blé, l'orge, l'avoine, le seigle, le millet et le colza en pré-émergence.

9. Utilisation selon la revendication 8 sur des sols secs.

10. Utilisation selon une des revendications 7 - 9 contre *Avena fatua* (folle avoine), *Alopecurus myosuroides* (vulpin des champs), *Apera spica-venti* (ventenat) et *Lolium multiflorum* (ivraie d'Italie).
